# EUROPEAN PATENT SPECIFICATION

(11) **EP 1 347 166 B1**
(45) Date of publication and mention of the grant of the patent: **17.10.2012**
(21) Application number: 01272278.1
(22) Date of filing: 21.12.2001
(51) Int. Cl.: F02D 41/00, F02M 25/07

(54) **FAILURE DIAGNOSING DEVICE FOR EXHAUST GAS RECYCLING DEVICE**
VORRICHTUNG ZUR FEHLERDIAGNOSE FÜR ABGASRÜCKFÜHRVORRICHTUNGEN
DISPOSITIF DE DIAGNOSTIC DE DEFAILLANCE DESTINE A UN DISPOSITIF DE RECYCLAGE DE GAZ D'ECHAPPEMENT

(30) Priority: 26.12.2000 JP 2000003956; 24.07.2001 JP 2001002235
(43) Date of publication of application: 24.09.2003
(73) Proprietor: Toyota Jidosha Kabushiki Kaisha, Toyota-shi, Aichi 471-8571 (JP)
(72) Inventor: Morikawa, Atsushi c/o Toyota Jidosha Kabushi.KAIS, Toyota-shi, Aichi 471-8571 (JP); Uchida, Takahiro c/o Toyota Jidosha Kabushi.Kais., Toyota-shi, Aichi 471-8571 (JP)
(74) Representative: TBK
(86) International application number: PCT/JP2001/011234
(87) International publication number: WO 2002/052143

(56) References cited:
- JP-A- 3 023 356
- JP-A- 2001 107 811
- JP-A- 2001 159 375
- US-A- 5 103 655
- US-A- 5 257 534
- US-A- 5 309 887
- US-A- 5 337 725
- US-A- 5 675 080

## Description

### Technical Field

The present invention relates to an abnormality diagnosing apparatus for an exhaust gas recirculation system which recirculates an exhaust gas of an internal combustion engine to an intake system of the engine.

### Background Art

There are known internal combustion engines, such as an engine to be mounted in a vehicle, which are equipped with an exhaust gas recirculation (EGR) system which recirculates part of an exhaust gas to the intake system to improve the exhaust emission. This EGR system has an EGR passage which connects the exhaust passage of an internal combustion engine to the intake passage thereof and an EGR valve provided in the EGR passage. Controlling the degree of opening of the EGR valve adjusts the amount of the exhaust gas (EGR amount) to be recirculated to the intake passage from the exhaust passage. When part of the exhaust gas is returned to the intake passage by the EGR system, the exhaust gas reduces the combustion temperature of the fuel, so that the generation of nitrogen oxide (NOx) in the combustion chamber is suppressed, thus improving the exhaust emission.

In case where some abnormality, such as failure of the EGR valve, occurs in such an EGR system, the EGR amount is likely to deviate from a suitable value for the operational state of the engine at that time, thereby deteriorating the combustion status or increasing the amount of NOx. A failure diagnosing apparatus for an exhaust gas recirculation system, which forcibly sets the EGR valve in a fully closed state or a fully open state when a predetermined abnormality diagnosis condition is satisfied, measures the amount of a change in pressure in the intake passage according to the actuation of the EGR valve and determines whether or not the EGR system is abnormal based on the amount of the pressure change, is proposed in Japanese Unexamined Patent Publication No. Hei 4-140464 as means of detecting an abnormality in an EGR system.

Because the failure diagnosing apparatus in the publication fully closes or fully opens the EGR valve in order to measure the amount of a change in pressure in the intake passage, the amount of a change in EGR amount during that operation becomes large. As the amount of a change in EGR amount increases this way, the exhaust emission becomes worse or the combustion state changes significantly, causing a drastic change in the engine power, which may deteriorate the drivability.

If there is a failure in sensors which measure the engine control amounts to be used in determining an abnormality, such as an intake pressure sensor which measures the intake pressure and an airflow meter which measures the amount of intake air, an apparatus which determines whether or not an EGR system is abnormal based on the results of measuring an engine control amount, such as the intake pressure, cannot naturally carry out accurate determination of an abnormality in the EGR system.

The present invention has been made in view of the above-described situations and it is an object of the invention to provide an abnormality diagnosing apparatus for an exhaust gas recirculation system which can easily and reliably perform abnormality diagnosis of the exhaust gas recirculation system. It is another object of the invention to provide an apparatus which can easily and reliably perform abnormality diagnosis of an exhaust gas recirculation system while suppressing the deterioration of the exhaust emission or the deterioration of the drivability.

### Disclosure of Invention

Means to achieve the objects and their operations and advantages will be discussed below.

An abnormality diagnosing apparatus for an exhaust gas recirculation system according to one embodiment of the invention is applied to an exhaust gas recirculation system which connects an exhaust system of an internal combustion engine to a downstream side of a throttle valve of an intake system by an exhaust gas recirculation passage and adjusts the amount of an exhaust gas to be recirculated to the intake system from the exhaust system by controlling the degree of opening of a control valve provided in the exhaust gas recirculation passage. When a predetermined abnormality diagnosis condition is met, the abnormality diagnosing apparatus for the exhaust gas recirculation system performs actuation control of the control valve in such a way as to gradually change the degree of opening of the control valve and detects the amount of a change in an amount of intake air or the amount of a change in intake pressure in a predetermined period after initiation of actuation control of the control valve. The abnormality diagnosing apparatus determines that there is an abnormality in the exhaust gas recirculation system when the detected value does not exceed a predetermined decision value.

According to the system, at the time of executing abnormality diagnosis of an exhaust gas recirculation system, a control is performed in such a way that the degree of opening of the control valve is gradually changed. Without any abnormality in the exhaust gas recirculation system, therefore, the exhaust gas recirculation amount is invariable or is not changed drastically but is changed gradually. While a gas has a response delay to a change in the degree of opening of the control valve, the amount of a change in exhaust gas recirculation amount becomes equal to or greater than a predetermined amount after a predetermined period passes. The amount of the intake air or the amount of the intake pressure changes in accordance with such a change in exhaust gas recirculation amount, so that the amount of a change in exhaust gas recirculation amount can thus be acquired by detecting the amount of a change in the amount of intake air or the amount of a change in intake pressure over a given period. When the amount of a change in the amount of intake air or the amount of a change in intake pressure over a given period is equal to or smaller than a decision value at the time of controlling the control valve, therefore, it is possible to determine that the exhaust gas recirculation system is abnormal and easily and reliably execute abnormality diagnosis of the exhaust gas recirculation system. What is more, because the exhaust gas recirculation amount does not change drastically at the time of executing abnormality diagnosis of the exhaust gas recirculation system, it is possible to suppress the deterioration of the exhaust emission and reduce a rapid change in engine power by suppressing a change in combustion state, thus making it possible to suppress the deterioration of the drivability.

It is desirable that the abnormality diagnosing apparatus should execute abnormality diagnosis of the exhaust gas recirculation system when the operational state of the internal combustion engine is stable. When the operational state of the internal combustion engine is stable, the amount of intake air or the intake pressure is stable. If abnormality diagnosis of the exhaust gas recirculation system is carried out when the operational state of the internal combustion engine is stable, it is possible to restrain a change in the amount of intake air or a change in intake pressure based on other factors than the control of the degree of opening of the control valve, so that the precision of abnormality diagnosis can be improved.

It is desirable that the abnormality diagnosing apparatus should execute abnormality diagnosis of the exhaust gas recirculation system when the internal combustion engine is in a vehicle deceleration state and an amount of fuel supply is equal to or smaller than a predetermined amount. Because fuel is hardly combusted at this time, it is possible to reliably suppress the deterioration of the exhaust emission at the time of executing abnormality diagnosis.

It is preferable that the abnormality diagnosing apparatus should restrain a change in the degree of opening of the throttle valve at the time of executing abnormality diagnosis. In this case, it is possible to suppress a change in pressure or a change in intake air in the intake system based on a change in throttle angle, thereby ensuring an improvement of the precision of abnormality diagnosis.

It is preferable that the abnormality diagnosing apparatus should fix the degree of opening of the throttle valve at the time of executing abnormality diagnosis. In this case, when the control valve is controlled to execute abnormality diagnosis of the exhaust gas recirculation system, the degree of opening of the throttle valve is fixed to adequately suppress a change in pressure or a change in intake air in the intake system, making it possible to further improve the precision of the abnormality diagnosis.

At the time abnormality diagnosis of the exhaust gas recirculation system is carried out, the throttle valve and the control valve are actuated in a way different from that in a normal operational mode. From the viewpoint of securing the drivability and keeping the durability of parts, such as the throttle valve and the control valve, therefore, it is better that the number of times abnormality diagnosis is performed should be as few as possible. To avoid erroneous diagnosis, it is desirable to perform abnormality diagnosis more than once.

According to a preferable abnormality diagnosing apparatus, therefore, a diagnosis result is determined after diagnosis is repeated a predetermined number of times and the abnormality diagnosis is prevented within a same trip after the diagnosis result is determined. If the number of executions of abnormality diagnosis until the result of diagnosis of an abnormality in the exhaust gas recirculation system is determined is set to, for example, "2", it is possible to make the number of executions of abnormality diagnosis to a minimum number necessary, thereby securing the drivability and keeping the durability of parts, such as the throttle valve and the control valve. It is of course possible to improve the precision of the abnormality diagnosis. Note that the "trip" is a period from the point at which the internal combustion engine is activated and to the point at which the engine is stopped.

A preferable abnormality diagnosing apparatus sets a direction of actuation of the control valve, at the time of executing abnormality diagnosis, based on the degree of opening of the control valve when the abnormality diagnosis condition is met. In this case, the direction of actuation of the control valve is set in the opening direction or the closing direction based on the degree of opening of the control valve when the abnormality diagnosis condition is met. This makes it possible to guarantee the total actuation amount of the control valve from the degree of opening of the control valve when the abnormality diagnosis condition is met. Securing the total actuation amount of the control valve this way can set the amount of a change in exhaust gas recirculation amount to a predetermined amount or greater. Therefore, when the amount of a change in the amount of intake air or the amount of a change in intake pressure over a given period at the time of controlling the control valve, it is possible to diagnose that there is an abnormality in the exhaust gas recirculation system and execute abnormality diagnosis of the exhaust gas recirculation system easily and reliably.

It is preferable that at the time of executing abnormality diagnosis, the abnormality diagnosing apparatus should set the direction of actuation of the control valve in a closing direction when the degree of opening of the control valve at the time the abnormality diagnosis condition is met is equal to or greater than a first predetermined degree of opening and should set the direction of actuation of the control valve in an opening direction when the degree of opening of the control valve at the time the abnormality diagnosis condition is met is smaller than the first predetermined degree of opening. In this case, the direction of actuation of the control valve is set in the closing direction when the degree of opening of the control valve at the time the abnormality diagnosis condition is met is equal to or greater than the first predetermined degree of opening and the direction of actuation of the control valve is set in the opening direction when the degree of opening of the control valve at the time the abnormality diagnosis condition is met is smaller than the first predetermined degree of opening. This can make it possible to secure the total actuation amount from the degree of opening of the control valve when the abnormality diagnosis condition is satisfied.

It is preferable that the abnormality diagnosing apparatus should set a gradual change amount for actuating the control valve to the closing direction and a gradual change amount for actuating the control valve to the opening direction different from each other. In case where the gradual change amount for actuating the control valve to the closing direction is set different from the gradual change amount for actuating the control valve to the opening direction, the gradual change amount for actuating the control valve to the closing direction can be set larger than the gradual change amount for actuating the control valve to the opening direction.

The degree of the exhaust gas recirculation amount in an internal combustion engine influences the engine power and impairs the drivability. When the exhaust gas recirculation amount decreases, increasing the amount of intake air, a reduction in engine power is suppressed so that the drivability is maintained. When the exhaust gas recirculation amount increases to thereby decrease the amount of intake air, on the other hand, the engine power becomes lower, which impairs the drivability or increases the smoke. As the gradual change amount for actuating the control valve to the closing direction and the gradual change amount for actuating the control valve to the opening direction are set different from each other, therefore, abnormality diagnosis of the exhaust gas recirculation system can be carried out while suppressing the deterioration of the drivability and an increase in smoke, regardless of whether the control valve is actuated to the opening direction or the control valve is actuated to the closing direction.

It is preferable that the abnormality diagnosing apparatus should change the gradual change amount of the control valve when the degree of opening of the control valve reaches a second predetermined degree of opening in accordance with actuation control of the control valve. In case of changing the gradual change amount of the control valve, the gradual change amount can be so changed as to become larger in the opening direction of the control valve and become smaller in the closing direction of the control valve.

In case of the control valve whose sensitivity to a change in exhaust gas recirculation amount with respect to a change in the degree of opening of the control valve drops when the degree of opening of the control valve is equal to or greater than the second predetermined degree of opening, setting the gradual change amount of the degree of opening of the control valve constant makes the amount of a change in exhaust gas recirculation amount smaller when the degree of opening of the control valve is equal to or greater than the second predetermined degree of opening. This requires a longer time to acquire the desired amount of a change in exhaust gas recirculation amount, thus making the time for abnormality diagnosis longer. With regard to this point, if the gradual change amount is allowed to change when the control valve is actuated toward the opening direction or the closing direction and the degree of opening of the control valve reaches the second predetermined degree of opening, it is possible to shorten the time to acquire the predetermined amount of a change in exhaust gas recirculation amount, thus shortening the time for abnormality diagnosis.

It is preferable that the abnormality diagnosing apparatus should prevent abnormality diagnosis when the degree of opening of the control valve at the time the abnormality diagnosis condition is met is smaller than a third predetermined degree of opening. As the control valve is opened to increase the exhaust gas recirculation amount from the state wherein the degree of opening of the control valve is small and there hardly is an exhaust gas recirculation amount, a reduction in engine power becomes significant, which deteriorates the drivability or increasing the smoke. With regard to this point, if abnormality diagnosis is prohibited when the degree of opening of the control valve at the time the abnormality diagnosis condition is satisfied is smaller than the third predetermined degree of opening, the deterioration of the drivability and an increase in smoke are suppressed reliably.

### Brief Description of Drawings

Fig. 1 is a schematic diagram showing the schematic structure of a diesel engine to which an exhaust gas recirculation system according to a first embodiment of the invention is applied;
Fig. 2 is a flowchart illustrating an abnormality diagnosis process for the exhaust gas recirculation system according to the first embodiment;
Fig. 3 is a flowchart also illustrating the abnormality diagnosis routine for the exhaust gas recirculation system according to the first embodiment;
Fig. 4 is a time chart showing one example of a control at the time of abnormality diagnosis according to the first embodiment;
Fig. 5 is a flowchart illustrating an abnormality diagnosis routine for the exhaust gas recirculation system according to a second embodiment of the invention;
Fig. 6 is an explanatory diagram illustrating a control on the degree of opening of an EGR control valve according to the second embodiment;
Fig. 7 is a graph showing the relationship between the degree of EGR opening and an EGR amount;
Fig. 8 is an explanatory diagram showing a change in EGR amount based on switching of gradual change amounts of the degree of EGR opening;
Fig. 9 is an exemplary diagram showing a diesel engine according to a third embodiment of the invention;
Fig. 10 is a flowchart of a main routine of an abnormality diagnosis process according to the embodiment;
Fig. 11 is a flowchart of an AFM abnormality diagnosis process according to the embodiment;
Fig. 12 is a flowchart of an EGR abnormality diagnosis process according to the embodiment;
Fig. 13 is a flowchart of an abnormality settling process according to the embodiment; and
Fig. 14 is a flowchart of an abnormality diagnosis process according to a further embodiment.

### Best Mode for Carrying Out the Invention

### (First Embodiment)

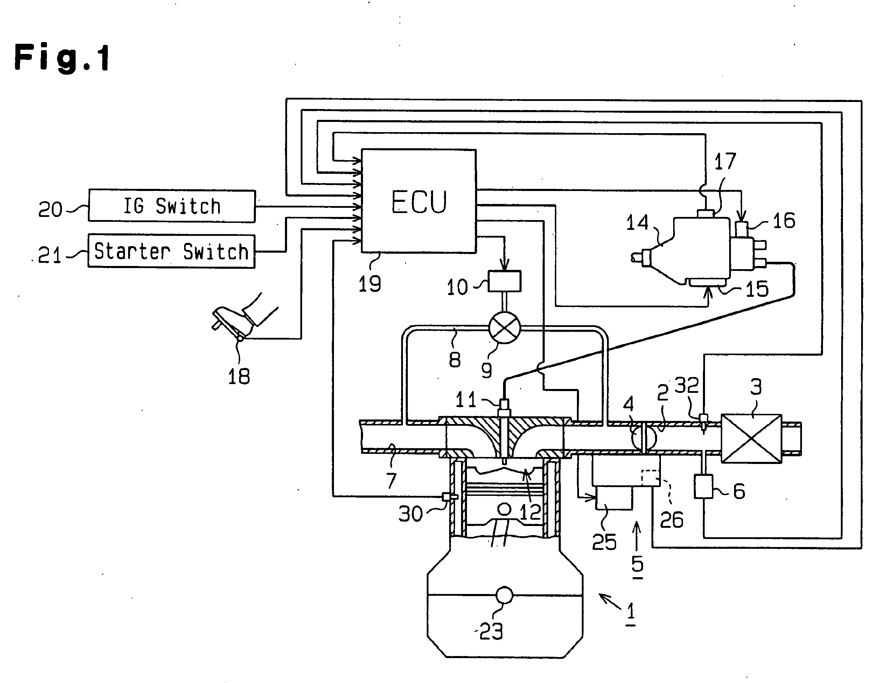

A first embodiment which is an abnormality diagnosing apparatus for an exhaust gas recirculation system according to the invention is applied to a vehicular diesel engine will be described below in detail with reference to Figs. 1 through 4.

As shown in Fig. 1, an intake passage 2 is connected to a combustion chamber 12 of a diesel engine 1 via an unillustrated intake valve. Provided in the intake passage 2 from the upstream side to the downstream side are an air cleaner 3, which filters the intake air; an airflow sensor 6, which detects the amount of intake air; an intake temperature sensor 32, which detects the temperature of the intake air: and a throttle valve 4, which regulates the amount of intake air to be led into the combustion chamber 12.

The throttle valve 4 is opened and closed by a drive mechanism 5, which includes a step motor 25 and gears that connect the step motor 25 to the throttle valve 4. The step motor 25 is controlled by an electronic control unit (hereinafter called "ECU") 19 for executing various kinds of control of the diesel engine 1. The drive mechanism 5 is provided with a fully-open switch 26, which becomes on when the throttle valve 4 is positioned at a position closer to the opening side than a predetermined position near the fully open position.

Connected to a further downstream side of the throttle valve 4 in the intake passage 2 is an exhaust gas recirculation (EGR) passage 8 which is branched from an exhaust passage 7 connected to the combustion chamber 12 via an unillustrated exhaust valve and is merged to the intake passage 2. Provided in the EGR passage 8 is an EGR control valve 9 which is opened and closed by an actuator 10, such as a diaphragm, which is controlled by the ECU 19. The amount of a gas to be led into the combustion chamber 12 is constant and the ratio of an EGR amount to the amount of intake air to be led into the combustion chamber 12 or an EGR ratio can be set freely by adjusting the amount of intake air by the throttle valve 4 and adjusting the EGR amount by the EGR control valve 9. That is, proper EGR control can be executed over the entire operational area of the diesel engine 1.

An injection nozzle 11 for directly injecting fuel is provided in the combustion chamber 12 of the diesel engine 1. The injection nozzle 11 is connected to a fuel injection pump 14. The fuel injection pump 14 is driven based on the rotation of an output shaft 23 of the diesel engine 1 and feeds fuel under pressure to the injection nozzle 11. The fuel injection pump 14 has a timer control valve 15 and a spill valve 16, which adjust the injection timing and injection amount of fuel to be injected from the injection nozzle 11. The actuations of the timer control valve 15 and spill valve 16 are also controlled by the ECU 19.

Provided in the fuel injection pump 14 are a rotor (not shown) which rotates in synchronism with the rotation of the output shaft of the diesel engine 1 and an engine speed sensor 17 which detects the rotational speed of the rotor. The engine speed sensor 17, which is constituted by an electromagnetic pickup, detects a projecting portion formed on the outer surface of the rotor and outputs a pulse signal corresponding to the rotational speed. The output of the engine speed sensor 17 is fetched into the ECU 19 as a signal which contributes to the computation of the engine speed of the diesel engine 1.

In addition, the ECU 19 fetches information on the amount of intake air detected by the airflow sensor 6 and information on the intake air temperature that is detected by the intake temperature sensor 32. The ECU 19 further fetches acceleration angle information (information on the depression amount of the acceleration pedal) which is detected by an acceleration angle sensor 18, ON/OFF information of an IG (Ignition) switch 20, ON/OFF information of a starter switch 21 and coolant temperature information which is detected by a coolant temperature sensor 30. The IG switch is a switch for controlling the start and stop of the engine and is on when the engine starts and off when it is stopped. The starter switch 20 is a switch for driving a starter motor which starts the engine, and is on when the starter motor rotates and off when the starter motor is stopped.

The ECU 19 executes fuel injection amount control and fuel injection timing control of the diesel engine 1 by driving the timer control valve 15 and the spill valve 16 of the fuel injection pump 14 based on the detection signals from the various sensors. The ECU 19 executes EGR control, intake air amount control, etc. by driving the step motor 25 and the actuator 10 or the like, which opens and closes the EGR control valve 9, based on the detection signals from the various sensors. Further, the ECU 19 performs abnormality diagnosis of the EGR system by driving the step motor 25 and the actuator 10 in a method different from the EGR control based on the detection signals from the various sensors.

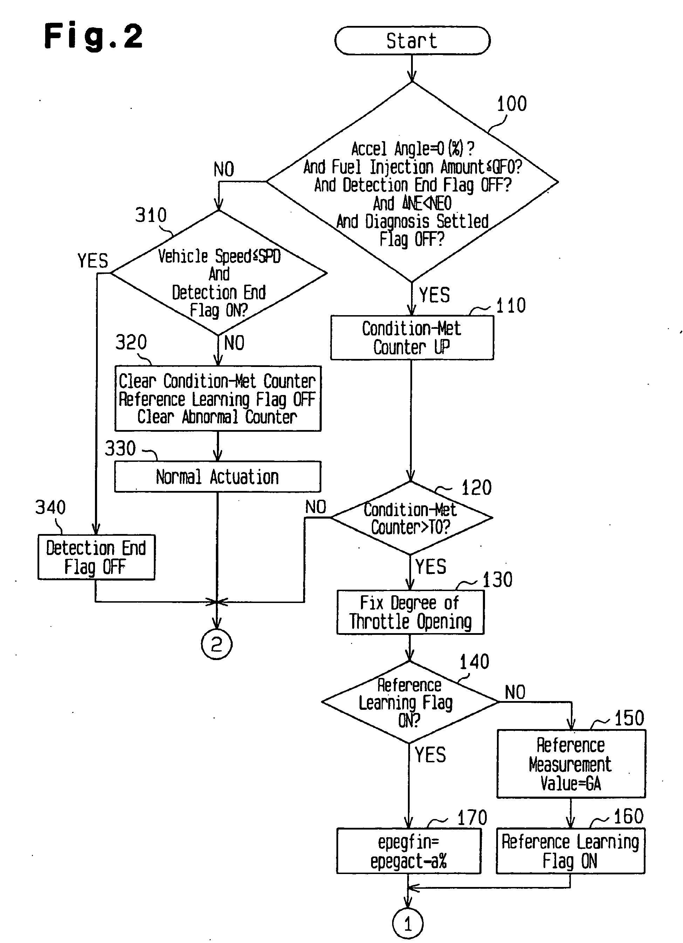

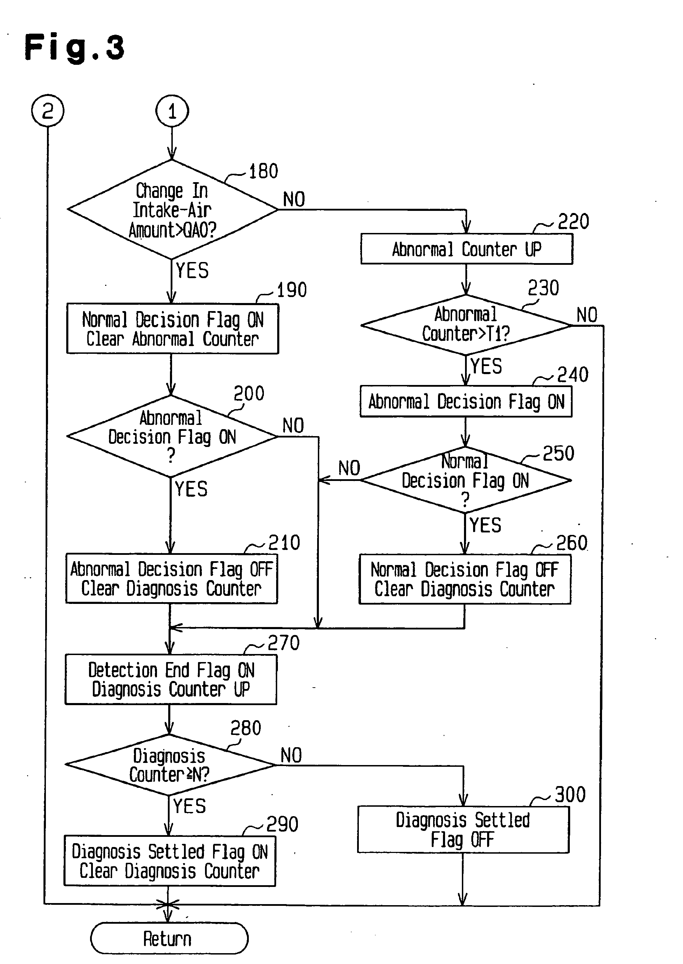

The procedures of the abnormality diagnosis process of the EGR system will be elaborated referring to flowcharts shown in Figs. 2 and 3. This routine is executed periodically every predetermined time, e.g., every several tens of milliseconds, by the ECU 19.

As the process goes to the routine, first it is determined in step 100 whether or not the preconditions for abnormality diagnosis are satisfied. Specifically, they are the acceleration angle being 0%, the fuel injection amount being equal to or smaller than a predetermined value QF0 (QF0 = 0 in this case), a detection end flag being OFF, a rotational speed deviation ΔNE being smaller than a predetermined value NE0, a diagnosis end flag being OFF and so forth. Note that the predetermined value QF0 is not limited to "0" but has only to be equal to or smaller than an idle injection amount. The acceleration angle being 0%, the fuel injection amount being equal to or smaller than the predetermined value QF0 and the rotational speed deviation ΔNE being smaller than the predetermined value NE0 in the preconditions mean that it is the time when fuel supply to the diesel engine 1 in a vehicle deceleration state is stopped. When and only when all of those conditions are met, it is considered that the preconditions for abnormality diagnosis are satisfied.

When all the conditions are met in step 100, it is considered that the preconditions for abnormality diagnosis are satisfied and the process proceeds to step 110. In step 110, the value of a condition-met counter is incremented.

In step 120, it is determined whether or not the operational state of the diesel engine 1 is stable by determining if the value of the condition-met counter is greater than a value equivalent to a predetermined time T0. This is because when the operational state of the diesel engine 1 is stable, the amount of intake air and the EGR amount are stable and the detection precision of abnormality diagnosis of the EGR system can be improved. When it is determined in step 120 that the value of the condition-met counter is equal to or smaller than the value indicating the predetermined time T0, the routine is temporarily terminated.

When it is determined in step 120 that the value of the condition-met counter is larger than the value indicating the predetermined time T0, it is confirmed that the operational state of the diesel engine 1 is stable. Therefore, the degree of opening of the throttle valve 4 is fixed to a degree of opening at that time in next step 130. As the degree of throttle opening is changed, the negative intake pressure at the downstream side of the throttle valve 4 changes and the change in negative intake pressure changes the EGR amount and the amount of intake air. At the time of abnormality diagnosis of the EGR system, therefore, the degree of throttle opening is fixed to suppress the amount of a change in the amount of intake air based on a change in the degree of throttle opening, thereby improving the precision of the abnormality diagnosis of the EGR system.

In next step 140, it is determined if a reference learning flag indicating whether or not a reference measurement value for the amount of intake air has already been learnt is ON. When it is not determined that the reference learning flag is ON, the reference measurement value has not been learnt yet, so that the process proceeds to step 150 where an intake-air amount GA at that time is set as the reference measurement value for the amount of intake air. In subsequent step 160, the reference learning flag is set ON and the process proceeds to step 180 in Fig. 3.

When it is determined in step 140 that the reference learning flag is ON, the reference measurement value has been learnt already, so that the process proceeds to step 170 where a target degree of opening **epegfin** of the EGR control valve 9 is set. The target opening degree **epegfin** is set by subtracting a gradual change amount "a%" from an actual degree of opening **epegact** of the EGR control valve 9. The EGR control valve 9 is subjected to feedback control to the target value at the normal actuation time, and when the process enters the routine, a stored actual opening degree immediately before the entering becomes an initial value. The gradual change amount "a%" is a ratio to the degree of opening of the EGR control valve 9 fully opened and either a positive or negative value can be set as a gradual change amount "a". Therefore, the degree of opening of the EGR control valve 9 is so controlled as to become smaller gradually when the gradual change amount "a" is a positive value, whereas the degree of opening of the EGR control valve 9 is so controlled as to become larger gradually when the gradual change amount "a" is a negative value.

Whether the gradual change amount "a" is set to a positive value or a negative value may be determined based on the actual degree of opening of the EGR control valve 9. That is, when the actual degree of opening of the EGR control valve 9 is larger than a predetermined value, the gradual change amount "a" can be set to a positive value, whereas when the actual degree of opening is equal to or smaller than the predetermined value, the gradual change amount "a" can be set to a negative value. And, the predetermined value can be set to a value of, for example, 30% open from the fully closed state of the EGR control valve 9. This setting can prevent erroneous detection and minimize the generation of smoke and the deterioration of the drivability. That is, if the EGR control valve 9 is closed gradually when the actual degree of opening of the EGR control valve 9 is smaller than the predetermined value, a change in the amount of intake air is small but there is a possibility of erroneous detection instead. In this case, therefore, the EGR control valve 9 is opened gradually to make a change in the amount of intake air large to a certain degree, thereby making it possible to prevent erroneous detection and minimize the generation of smoke and the deterioration of the drivability. When the actual degree of opening of the EGR control valve 9 is larger than the predetermined value, the EGR control valve 9 is closed gradually to make it possible to execute abnormality diagnosis without causing the generation of smoke and the deterioration of the drivability.

In step 180, the intake-air amount GA is subtracted from the amount of intake air corresponding to the degree of opening of the EGR control valve 9 to detect the amount of a change in the amount of intake air after the initiation of the control of the EGR control valve 9, and it is determined whether or not the change in the amount of intake air is larger than a predetermined decision value QA0. When it is determined that the change in the amount of intake air is larger than the decision value QA0, the process proceeds to step 190, but when it is determined that the change in the amount of intake air is equal to or smaller than the decision value QA0, the process proceeds to step 220.

In step 190, it is determined that the EGR system is normal and a normal decision flag indicating that the diagnosis result is normal is set ON and the value of an abnormal counter which measures the time passed after the initiation of the opening control of the EGR control valve 9 is cleared.

In next step 200, it is determined whether or not an abnormal decision flag indicating that the EGR system is abnormal is ON. When it is determined that the abnormal decision flag is ON, the process proceeds to step 210, whereas when it is determined that the abnormal decision flag is OFF, the process proceeds to step 270.

In step 210, the abnormal decision flag is set OFF and a diagnosis counter is cleared. When it is determined in the step 180 that the change in the amount of intake air is equal to or smaller than the decision value QA0, the value of the abnormal counter is incremented by one in step 220.

In step 230, it is determined whether or not the value of the abnormal counter is larger than a value indicating a predetermined time T1. The predetermined time T1 is set to such a value that a change in the amount of intake air exceeds the decision value QA0 when the gradual change amount of the degree of opening of the EGR control valve 9 is "a%" in case where the EGR system including the EGR control valve 9 and the EGR passage 8 is normal. When it is determined in the step 230 that the value of the abnormal counter is equal to or smaller than the value indicating the predetermined time T1, the routine is temporarily terminated. When it is determined that the value of the abnormal counter is larger than the value indicating the predetermined time T1, the process proceeds to step 240 and it is diagnosed that the EGR system is abnormal and the abnormal decision flag is set ON.

In next step 250, it is determined whether or not the normal decision flag is ON. When it is determined that the normal decision flag is ON, the process proceeds to step 260, whereas when it is determined that the normal decision flag is OFF, the process proceeds to step 270. In step 260, the normal decision flag is set OFF and the diagnosis counter is cleared.

In step 270 following step 210 and step 260, the detection end flag is set ON and the value of the diagnosis counter is incremented. It is to be noted that the detection end flag and the diagnosis counter are activated only once during a single vehicle deceleration. Therefore, abnormality diagnosis will not be determined during a single vehicle deceleration. This is done to prevent erroneous detection during a single vehicle deceleration and avoid giving uncomfortable feeling to a driver by executing no abnormality diagnosis once normal decision is made. Therefore, a diagnosis result will not be determined until after at least two vehicle decelerations. This can surely eliminate the possibility of erroneous detection and suppress the execution of an unnecessary abnormality diagnosis process. Here, "during single vehicle deceleration" means a state where the conditions in step 100 are satisfied. If normal decision and abnormal decision are made alternately in abnormality diagnosis in plural consecutive vehicle decelerations, the diagnosis counter is reset and is then incremented by one, so that the value of the diagnosis counter always becomes "1".

In next step 280, it is determined whether or not to settle the diagnosis result based on whether or not the value of the diagnosis counter is equal to or larger than a predetermined value N (N = 2 in this embodiment). When it is determined that the value of the diagnosis counter is equal to or larger than 2, a diagnosis determined flag is set ON in step 290 and the diagnosis counter is cleared. After the diagnosis determined flag becomes ON, abnormality diagnosis is prevented. This minimizes the number of abnormality diagnoses, thereby securing the drivability and keeping the durability of parts, such as the throttle valve 4. Of course, the precision of abnormality diagnosis is improved.

When it is determined in step 280 that the value of the diagnosis counter is "1", the diagnosis determined flag is set OFF in step 300 and the routine is terminated. It is desirable to set the predetermined value of the number of diagnoses to N = 1 from the viewpoint of minimizing the number of abnormality diagnoses.

If one of the conditions is not met in the step 100, it is determined that the preconditions are not satisfied and the execution of abnormality diagnosis is prevented and the process proceeds to step 310. In step 310, it is determined whether or not the vehicle speed is equal to or lower than a predetermined vehicle speed SPD (SPD = 5 km/hour in this case) and the detection end flag is ON. The vehicle speed being equal to or lower than the predetermined vehicle speed SPD means that the vehicle is almost in a stationary state. When it is determined in step 310 that the vehicle speed is equal to or lower than the predetermined vehicle speed SPD and the detection end flag is ON, the detection end flag is set OFF in next step 340 and the routine is temporarily terminated.

When it is determined in step 310 that the vehicle speed is higher than the predetermined vehicle speed SPD or the detection end flag is OFF, the process proceeds to step 320. In step 320, the condition-met counter is cleared, the reference learning flag is set OFF and the abnormal counter is cleared. In step 330, the EGR control valve 9 and the throttle valve 4 are actuated normally and the routine is temporarily terminated.

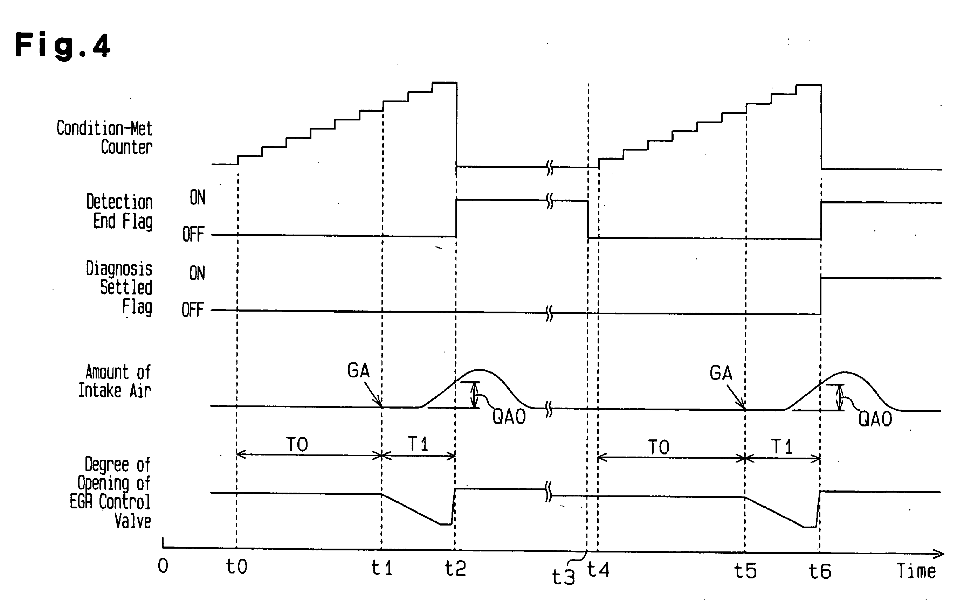

Fig. 4 is a time chart showing one example of the process for abnormality diagnosis of the exhaust gas recirculation system in the diesel engine 1 that is constituted in the above-described manner. A description will be given of the case where the value N of the diagnosis counter is set to 2.

After the diesel engine 1 is started, when the vehicle is driven and deceleration takes places in the vehicle running state so that the amount of fuel supply becomes equal to or smaller than a predetermined amount, it is determined that the preconditions for abnormality diagnosis are met at time t0 (step 100).

If the preconditions are kept satisfied in a period of the predetermined time T0 from time t0 to time t1, it is confirmed that the operational state of the diesel engine 1 is stable (step 120). As a result, abnormality diagnosis is initiated at time t1 and the degree of opening of the throttle valve 4 is fixed. The intake-air amount GA at time t1 is set as a reference measurement value (step 150).

Within the predetermined time T1 from time t1 to time t2, the EGR control valve 9 is controlled in such a way that the degree of opening of the EGR control valve 9 changes by the gradual change amount "a%" (a > 0 in this case) (step 170). When the EGR control valve 9 is normal, the degree of opening becomes smaller gradually. As the degree of opening of the EGR control valve 9 decreases, the EGR amount decreases gradually and the amount of intake air changes to increase gradually.

When it is determined within the predetermined time T1 from time t1 to time t2 that the amount of a change in the amount of intake air is larger than the decision value QA0, the normal decision flag is set ON (step 190). At this time, when the abnormal decision flag is ON, the abnormal decision flag is set OFF and the value of the diagnosis counter is cleared to "0". Then, the detection end flag is set ON and the diagnosis counter is incremented by one so that its value becomes "1".

When it is determined at time t2 that the amount of a change in the amount of intake air after passage of the predetermined time T1 is equal to or smaller than the decision value QA0, the abnormal decision flag is set ON (step 240). At this time, when the normal decision flag is ON, the normal decision flag is set OFF and the value of the diagnosis counter is cleared to "0". Then, the detection end flag is set ON and the diagnosis counter is incremented by one so that its value becomes "1".

In case where the vehicle deceleration state that has started after time t0 continues even after time t2, the detection end flag is ON so that the preconditions for abnormality diagnosis are not met (step 100). Therefore, the condition-met counter is cleared at time t2, the reference learning flag is set OFF and the abnormal counter is cleared (step 320). Then, the EGR control valve 9 and the throttle valve 4 are actuated normally to execute EGR control.

When the vehicle is decelerated further and the vehicle speed becomes equal to or lower than the predetermined vehicle speed SPD at time t3, it is determined that it is in an idling state in the vehicle stationary state (step 310) and the detection end flag is set OFF (step 340).

When the acceleration pedal is depressed to shift the vehicle to the normal running and the vehicle is shifted again to the deceleration running so that the amount of fuel supply becomes equal to or smaller than a predetermined amount, it is determined at time t4 that the preconditions for abnormality diagnosis are satisfied (step 100).

If the preconditions are kept satisfied in a period of the predetermined time T0 from time t4 to time t5, it is confirmed that the operational state of the diesel engine 1 is stable (step 120). As a result, abnormality diagnosis is initiated at time t5 and the degree of opening of the throttle valve 4 is fixed. The intake-air amount GA at time t5 is set as a reference measurement value (step 150).

In the predetermined time T1 from time t5 to time t6, the EGR control valve 9 is controlled in such a way that the degree of opening of the EGR control valve 9 changes by the gradual change amount "a%" (a > 0 in this case) (step 170). When the EGR control valve 9 is normal, the degree of opening becomes smaller gradually. As the degree of opening of the EGR control valve 9 decreases, the EGR amount decreases gradually and the amount of intake air changes to increase gradually.

When it is determined within the predetermined time T1 from time t5 to time t6 that the amount of a change in the amount of intake air is larger than the decision value QA0, the normal decision flag is set ON (step 190). At this time, when the abnormal decision flag is ON, the abnormal decision flag is set OFF and the value of the diagnosis counter is cleared to "0". Then, the detection end flag is set ON and the diagnosis counter is incremented by one so that its value becomes "1".

When it is determined at time t6 that the amount of a change in the amount of intake air after passage of the predetermined time T1 is equal to or smaller than the decision value QA0, the abnormal decision flag is set ON (step 240). At this time, when the normal decision flag is ON, the normal decision flag is set OFF and the value of the diagnosis counter is cleared to "0". Then, the detection end flag is set ON and the diagnosis counter is incremented by one so that its value becomes "1".

As long as the diagnosis result of the abnormality diagnosis at times t1-t2 is identical to the diagnosis result of the abnormality diagnosis at times t5-t6, therefore, the value of the diagnosis counter becomes "2". Then, it is determined that the value of the diagnosis counter is equal to or greater than N (step 290), the diagnosis determined flag is set ON to settle the diagnosis result and the diagnosis counter is cleared.

In case where the vehicle deceleration state that has started after time t4 continues even after time t6, the detection end flag is ON so that the preconditions for abnormality diagnosis are not met (step 100). Therefore, the condition-met counter is cleared at time t6, the reference learning flag is set OFF and the abnormal counter is cleared (step 320). Then, the EGR control valve 9 and the throttle valve 4 are actuated normally to execute EGR control.

When the vehicle is decelerated further and the vehicle speed becomes equal to or lower than the predetermined vehicle speed SPD, it is determined that it is in an idling state in the vehicle stationary state (step 310) and the detection end flag is set OFF (step 340).

Even when the acceleration pedal is depressed to shift the vehicle to the normal running and the vehicle is shifted again to the deceleration running, the diagnosis determined flag is ON so that the preconditions for abnormality diagnosis become unsatisfied (step 100). After the diagnosis determined flag is set ON, the diagnosis determined flag is set OFF based on the stopping of the diesel engine 1. If the diagnosis result of the abnormality diagnosis of the EGR system is determined while the diesel engine 1 is running, therefore, abnormality diagnosis of the EGR system is repeatedly executed in a single trip from the starting of the diesel engine 1 to the stopping thereof.

The above-described embodiment can obtain the following advantages.
(1) At the time of executing abnormality diagnosis of the EGR system, the EGR control valve 9 is controlled in such a way that the degree of opening of the EGR control valve 9 is gradually changed. Without any abnormality in the EGR system, therefore, the EGR amount is invariable or is not changed drastically but the EGR amount is changed gradually. As the amount of the intake air in the EGR passage 8 changes in accordance with such a change in exhaust gas recirculation amount, so that the amount of a change in EGR amount can be acquired by detecting the amount of a change in the amount of intake air over the predetermined time T1. When the amount of a change in the amount of intake air in the predetermined time T1 is equal to or smaller than the decision value QA0 at the time of controlling the EGR control valve 9, therefore, it is possible to determine that the EGR system is abnormal and easily and reliably execute abnormality diagnosis of the EGR
system. What is more, because the EGR amount does not change drastically at the time of executing abnormality diagnosis of the EGR system, it is possible to suppress the deterioration of the exhaust emission of the diesel engine 1 and reduce a rapid change in engine power by suppressing a change in combustion state, thus making it possible to suppress the deterioration of the drivability.
(2) The ECU 19 executes abnormality diagnosis of the EGR system when the operational state of the diesel engine 1 is stable. Therefore, it is possible to suppress a change in the amount of intake air based on other factors than the control of the degree of opening of the EGR control valve 9, so that the precision of abnormality diagnosis of the EGR system can be improved.
(3) Further, the ECU 19 executes abnormality diagnosis of the EGR system when the amount of fuel supply during deceleration of the vehicle is equal to or smaller than a predetermined amount. Because combustion is not performed when the amount of fuel supply to the diesel engine 1 is equal to or smaller than a predetermined amount, it is possible to reliably suppress the deterioration of the exhaust emission at the time of executing abnormality diagnosis of the EGR system.
(4) When controlling the EGR control valve 9 to perform abnormality diagnosis of the EGR system, the ECU 19 fixes the degree of opening of the throttle valve 4. Therefore, it is possible to adequately suppress a change in the amount of intake air by suppressing a change in pressure in the EGR passage 8 based on the change in degree of throttle opening, so that the precision of abnormality diagnosis of the EGR system can be increased.
(5) The ECU 19 settles a diagnosis result when the number of abnormality diagnoses becomes N (N = 2 in the embodiment), and the abnormality diagnosis is prevented within the same trip after the diagnosis result is determined. It is therefore possible to make the number of abnormality diagnoses to a minimum number necessary, thereby securing the drivability and keeping the durability of parts, such as the throttle valve 4 and the EGR control valve 9, so that the precision of the abnormality diagnosis can be improved.

### (Second Embodiment)

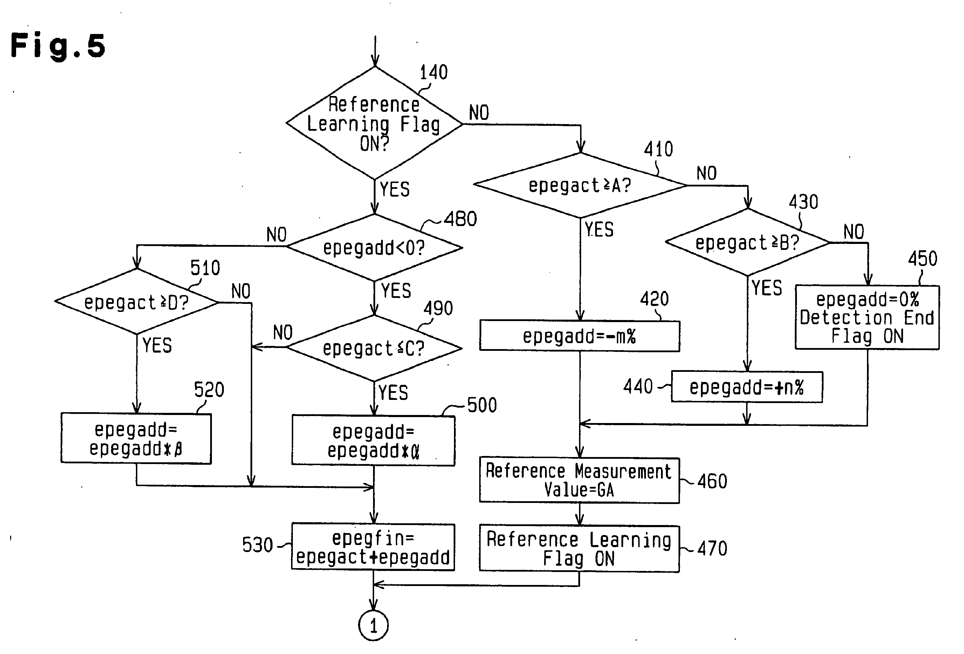

A second embodiment will be elaborated below with reference to Figs. 5 through 8.

In the embodiment, the system structures of the internal combustion engine and its control apparatus are the same as those of the first embodiment. In the first embodiment, the actual opening degree **epegact** of the EGR control valve 9 is not considered at the time of setting the target opening degree **epegfin** of the EGR control valve 9 in the abnormality diagnosis of the EGR system, but the gradual change amount "a" which is a fixed value is subtracted from the actual opening degree **epegact** of the EGR control valve 9. The EGR control valve 9 is actuated toward the closing direction when the gradual change amount "a" is a positive value, and the EGR control valve 9 is actuated toward the opening direction when the gradual change amount "a" is a negative value.

According to the present embodiment, by way of contrast, the actuation direction of the EGR control valve 9 and the gradual change amount at the time of executing abnormality diagnosis of the EGR system are set based on the degree of opening of the EGR control valve 9 when the conditions for abnormality diagnosis are satisfied.

Next, the procedures of the abnormality diagnosis process of the EGR system will be elaborated referring to a flowchart shown in Fig. 5. Fig. 5 is a flowchart illustrating an abnormality diagnosis process for the EGR system which is executed by the ECU 19, and this process is the abnormality diagnosis process according to the first embodiment whose steps 140, 150, 160 and 170 are changed.

When this process starts, processes of steps 100, 110, 120 and 130 are performed in order. When it is determined whether or not in step 140 that the reference measurement value for the amount of intake air has not been learnt yet and the reference learning flag is not ON, the process proceeds to step 410.

In step 410, it is determined whether or not the actual opening degree **epegact** of the EGR control valve 9 when the conditions for abnormality diagnosis are met is equal to or greater than a predetermined value A as a first predetermined degree of opening. This predetermined value A is a ratio to the degree of opening of the EGR control valve 9 fully opened, in which case A is set to 50%. When it is determined that the actual opening degree **epegact** at that time is equal to or greater than the predetermined value A, the process proceeds to step 420, and when it is determined that the actual opening degree **epegact** is smaller than the predetermined value A, the process proceeds to step 430.

In step 430, it is determined whether or not the actual opening degree **epegact** of the EGR control valve 9 when the conditions for abnormality diagnosis are met is equal to or greater than a predetermined value B as a third predetermined degree of opening. This predetermined value B is a ratio to the degree of opening of the EGR control valve 9 fully opened, in which case B is set to 30%. When it is determined that the actual opening degree **epegact** at that time is equal to or greater than the predetermined value B, the process proceeds to step 440, and when it is determined that the actual opening degree **epegact** is smaller than the predetermined value B, the process proceeds to step 450.

In step 420, a gradual change amount **epegadd** for setting the target opening degree **epegfin** of the EGR control valve 9 is set to "-m%". In the gradual change amount "-m%", the sign "-" indicates that the actuation direction of the EGR control valve 9 is set in the closing direction and "m" is a ratio to the degree of opening of the EGR control valve 9 fully opened and is a positive value. The actuation control of the EGR control valve 9 is therefore performed toward the closing direction based on the gradual change amount "-m%".

In step 440, the gradual change amount **epegadd** of the EGR control valve 9 is set to "+n%". In the gradual change amount "+n%", the sign "+" indicates that the actuation direction of the EGR control valve 9 is set in the opening direction and "n" is a ratio to the degree of opening of the EGR control valve 9 fully opened and is a positive value. The actuation control of the EGR control valve 9 is therefore performed toward the opening direction based on the gradual change amount "+n%". When the EGR control valve 9 is actuated toward the closing direction, the EGR amount decreases and the amount of intake air increases, thereby suppressing a reduction in the power of the diesel engine 1 and keeping the drivability. When the EGR control valve 9 is actuated toward the opening direction, on the other hand, the EGR amount increases and the amount of intake air decreases, so that the power of the diesel engine 1 drops and the drivability is deteriorated. Therefore, the gradual change amount m in the closing direction and the gradual change amount n in the opening direction are so set as to have a relationship of m > n.

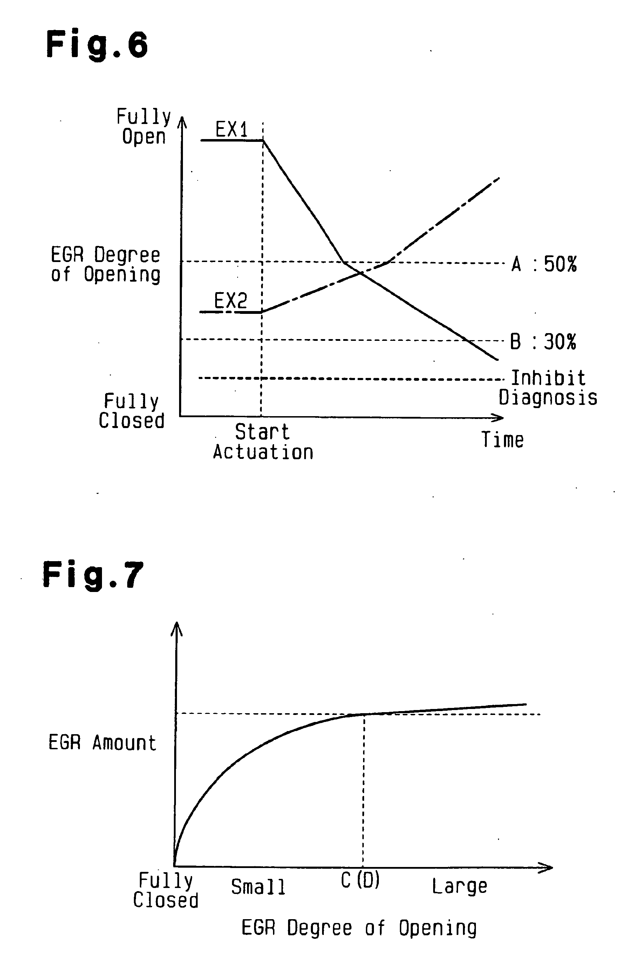

As the positive/negative of the gradual change amount **epegadd** of the degree of opening of the EGR control valve 9 is set based on the actual opening degree **epegact** of the EGR control valve 9 when the conditions for abnormality diagnosis are satisfied, it is possible to make large the total actuation amount of the EGR control valve 9 from the position of the actual opening degree as shown in Fig. 6. That is, in case where the degree of opening of the EGR control valve 9 at the time of initiation of the actuation thereof is equal to or greater than the predetermined value A (50%) as shown in an example EX1 in Fig. 6, the total actuation amount of the EGR control valve 9 can be made larger by actuating the EGR control valve 9 toward the closing direction. In case where the degree of opening of the EGR control valve 9 at the time of initiation of the actuation thereof is smaller than the predetermined value A (50%) as shown in an example EX2 in Fig. 6, the total actuation amount of the EGR control valve 9 can be made larger by actuating the EGR control valve 9 toward the opening direction. By increasing the total actuation amount of the EGR control valve 9 this way, a sufficient change in EGR amount is obtained and a sufficient change in the amount of intake air can be acquired according to the change in EGR amount.

In step 450, the gradual change amount **epegadd** of the degree of opening of the EGR control valve 9 is set to "0%" and the detection end flag is set ON. As the detection end flag is set ON in step 450, when the routine of the abnormality diagnosis process is executed next, it is determined in the step 100 that the conditions for abnormality diagnosis are not satisfied so that the abnormality diagnosis process is prevented. This is because increasing the EGR amount from the state of a small EGR amount in which the actual degree of opening of the EGR control valve 9 is smaller than the predetermined value B, the power drop of the diesel engine 1 becomes prominent, which brings about the deterioration of the drivability and the generation of smoke.

In step 460 following steps 420, 440 and step 450, the intake-air amount GA at that time is set as the reference measurement value for the amount of intake air. In subsequent step 470, the reference learning flag is set ON and the process proceeds to the step 180.

When it is determined in the step 140 that the reference learning flag is ON, the reference measurement value has already been learnt so that the process proceeds to step 480. In step 480, it is determined whether or not the gradual change amount **epegadd** of the degree of opening of the EGR control valve 9 is less than zero. When it is determined that the gradual change amount **epegadd** is less than zero, the process proceeds to step 490, whereas when it is determined that the gradual change amount **epegadd** is equal to or greater than 0, the process proceeds to step 510.

In step 490, it is determined whether or not the actual opening degree **epegact** of the EGR control valve 9 at that time is equal to or smaller than a predetermined value C as a second predetermined degree of opening. This predetermined value C is a ratio to the degree of opening of the EGR control valve 9 fully opened, in which case C is set to 50%. When it is determined that the actual opening degree **epegact** at that time is equal to or smaller than the predetermined value C, the process proceeds to step 500, and when it is determined that the actual opening degree **epegact** is greater than the predetermined value C, the process proceeds to step 530.

In step 500, a new gradual change amount **epegadd** is set by multiplying the gradual change amount **epegadd** (= -m%) set in the step 420 by a compensation coefficient α The compensation coefficient α is set in such a way that 0 < α < 1. Therefore, the new gradual change amount **epegadd** set this way is changed to a smaller value.

In step 510, it is determined whether or not the actual opening degree **epegact** at that time is equal to or greater than a predetermined value D as the second predetermined degree of opening. This predetermined value D is a ratio to the degree of opening of the EGR control valve 9 fully opened, in which case D is set to 50%. When it is determined that the actual opening degree **epegact** at that time is equal to or greater than the predetermined value D, the process proceeds to step 520, and when it is determined that the actual opening degree **epegact** is smaller than the predetermined value D, the process proceeds to step 530.

In step 520, a new gradual change amount **epegadd** is set by multiplying the gradual change amount **epegadd** (= +n%) set in the step 440 by a compensation coefficient β. The compensation coefficient β is set in such a way that 1 < β. Therefore, the new gradual change amount **epegadd** set this way is changed to a larger value.

The reason why the gradual change amount **epegadd** is updated as in steps 500 and 520 is that when the degree of opening of the EGR control valve 9 is equal to or greater than the predetermined value C, D as shown in Fig. 7, the sensitivity to a change in exhaust gas recirculation amount with respect to a change in the degree of opening falls. If the gradual change amount of the EGR control valve 9 is set constant, when the degree of opening of the EGR control valve 9 is equal to or greater than the predetermined value C, D, the amount of a change in EGR amount becomes small so that it takes longer time to acquire the desired amount of a change in EGR amount. When the degree of opening of the EGR control valve 9 is equal to or greater than the predetermined value C, D, therefore, the gradual change amount **epegadd** is changed to a larger value to thereby shorten the time needed for acquiring a predetermined amount of a change in EGR amount.

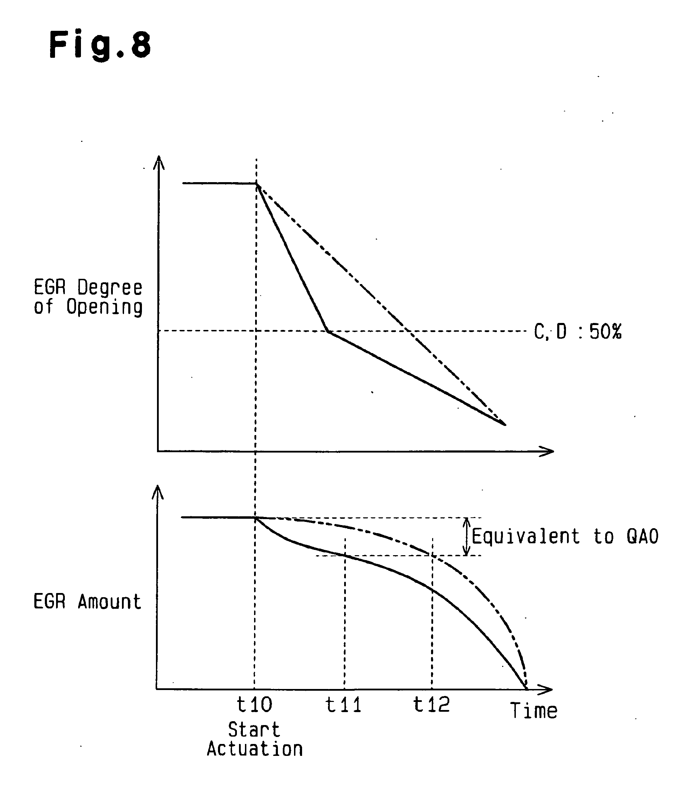

That is, the degree of opening of the EGR control valve 9 is changed gradually from the stage where the degree of opening of the EGR control valve 9 is equal to or greater than the predetermined value C, D as shown in Fig. 8. When the degree of opening of the EGR control valve 9 is changed gradually with the gradual change amount taken as a constant value, as indicated by a two-dot chain line in Fig. 8, it requires a long time from timing t10 for the initiation of the actuation of the EGR control valve 9 to time t12 in order to acquire the amount of a change in EGR amount that is equivalent to the decision value QA0. If the degree of opening of the EGR control valve 9 is changed gradually with the gradual change amount set larger than the constant value, when the degree is equal to or greater than the predetermined value C, D, as indicated by a solid line in Fig. 8, by way of contrast, it merely requires a time from timing t10 for the initiation of the actuation of the EGR control valve 9 to time t11 in order to acquire the amount of a change in EGR amount that is equivalent to the decision value QA0, thus making it possible to shorten the time needed to acquire the predetermined amount of a change in EGR amount.

In step 530 following step 500 and step 520, the target opening degree **epegfin** of the EGR control valve 9 is set. The target opening degree **epegfin** is set by adding the gradual change amount **epegadd** set in the step 420, 440, 500 or 520 to the actual opening degree **epegact** of the EGR control valve 9. The EGR control valve 9 is subjected to feedback control to the target value at the normal actuation time, and when the process enters the routine, a stored actual opening degree immediately before the entering becomes an initial value. Therefore, when the gradual change amount **epegadd** is a negative value, the EGR control valve 9 is controlled toward the closing direction so that its degree of opening becomes smaller gradually whereas when the gradual change amount **epegadd** is a positive value, the EGR control valve 9 is controlled toward the opening direction so that its degree of opening becomes larger gradually.

When the process of step 530 is completed, the process proceeds to the step 180 (see Fig. 3) and the processing at and following step 180 is executed to perform abnormality diagnosis.

The above-described embodiment can provide the following advantages in addition to the advantages (1) to (5) of the first embodiment.
(6) According to the present embodiment, the actuation direction of the EGR control valve 9 is set toward the opening direction or the closing direction based on the degree of opening of the EGR control valve 9 when the conditions for abnormality diagnosis are satisfied. This makes it possible to secure the total actuation amount of the EGR control valve 9 and set the amount of a change in EGR amount equal to or greater than a predetermined amount so that the abnormality diagnosis can be carried out reliably.
(7) According to the embodiment, the gradual change amount for actuating the EGR control valve 9 toward the closing direction is set greater than the gradual change amount for actuating the EGR control valve 9 toward the opening direction. In case of actuating the EGR control valve 9 toward the closing direction, as the EGR amount decreases and the amount of intake air increases, it is possible to suppress a reduction in engine power and keep the drivability. In case of actuating the EGR control valve 9 toward the opening direction, as the EGR amount increases and the amount of intake air decreases to thereby lower the engine power, thus deteriorating the drivability. Because the gradual change amount for actuating the EGR control valve 9 toward the opening direction is set to a small value, however, the deterioration of the drivability can be suppressed. Accordingly, abnormality diagnosis of the exhaust gas recirculation system can be executed while suppressing the deterioration of the drivability regardless of whether the EGR control valve 9 is actuated toward the opening direction or the EGR control valve 9 is actuated toward the closing direction.
(8) According to the present embodiment, at the time the EGR control valve 9 is actuated toward the opening direction or the closing direction, when the degree of opening of the EGR control valve 9 is equal to or greater than the second predetermined degree of opening (predetermined value C, D), the gradual change amount of the EGR control valve 9 is changed to a large value. This makes it possible to shorten the time needed to acquire a predetermined amount of a change in EGR amount, thereby shortening the abnormality diagnosis time.
(9) According to the present embodiment, abnormality diagnosis is prevented when the actual opening degree **epegact** of the EGR control valve 9 when the conditions for abnormality diagnosis are satisfied is smaller than the third predetermined degree of opening (predetermined value B). This makes it possible to suppress the deterioration of the drivability and the generation of smoke that are originated from the abnormality diagnosis of the EGR system.

The embodiment of the present invention may be modified as follows.

As a precondition for abnormality diagnosis in the first and second embodiments, the amount of a change in vehicle speed being smaller than a predetermined value may be used instead of the rotational speed deviation ΔNE being smaller than the predetermined engine speed NE0.

In the first and second embodiments, when a change in the amount of intake air is equal to or smaller than the decision value QA0 after the predetermined time T1 passes, the abnormal decision flag is set ON in step 240. An abnormality measuring counter may be provided in place of the abnormal decision flag, so that the EGR system is diagnosed as having an abnormality when an abnormality every predetermined time T1 is detected plural times.

Although the predetermined value A for setting the gradual change amount of the EGR control valve 9 is set constant in the second embodiment, the predetermined value A may be computed based on the engine speed and the degree of opening of the throttle valve 4 or may be acquired by referring to a map which is defined by the engine speed and the degree of opening of the throttle valve 4. Further, the predetermined value A may be acquired based on the engine speed and the intake pressure.

Although the predetermined values C and D for altering the gradual change amount of the EGR control valve 9 are set equal to each other, they may be set to different values. Although the predetermined values C and D are set constant, the predetermined values C and D may be computed based on the engine speed and the degree of opening of the throttle valve 4 or may be acquired by referring to a map which is defined by the engine speed and the degree of opening of the throttle valve 4.

Although the second embodiment is embodied into an abnormality diagnosing apparatus for an EGR system of the diesel engine 1, it may be embodied into an abnormality diagnosing apparatus for an EGR system of a gasoline engine. In case of a gasoline engine, the amount of a gas to be led into the combustion chamber does not become approximately constant, so that the amount of a change in EGR amount cannot be detected based on the amount of a change in the amount of intake air. In case of the EGR system of a gasoline engine, therefore, abnormality diagnosis should be carried out based on the amount of a change in intake pressure in the EGR passage 8 instead of the amount of a change in the amount of intake air. The amount of a change in intake pressure in the EGR passage 8 varies in accordance with such a change in the amount of the exhaust gas recirculation and the amount of a change in EGR amount can be obtained by detecting the amount of a change in intake pressure over a given time. When the amount of a change in intake pressure over a given time is equal to or smaller than a predetermined decision value at the time of controlling the EGR control valve 9, therefore, it is possible to diagnose that the EGR system has an abnormality and execute abnormality diagnosis of the EGR system easily and reliably.

Although abnormality diagnosis the EGR system of the diesel engine 1 is executed based on the amount of a change in the amount of intake air in the first and second embodiments, abnormality diagnosis may be carried out based on the amount of a change in intake pressure in the EGR passage 8 instead of the amount of a change in the amount of intake air.

### (Third Embodiment)

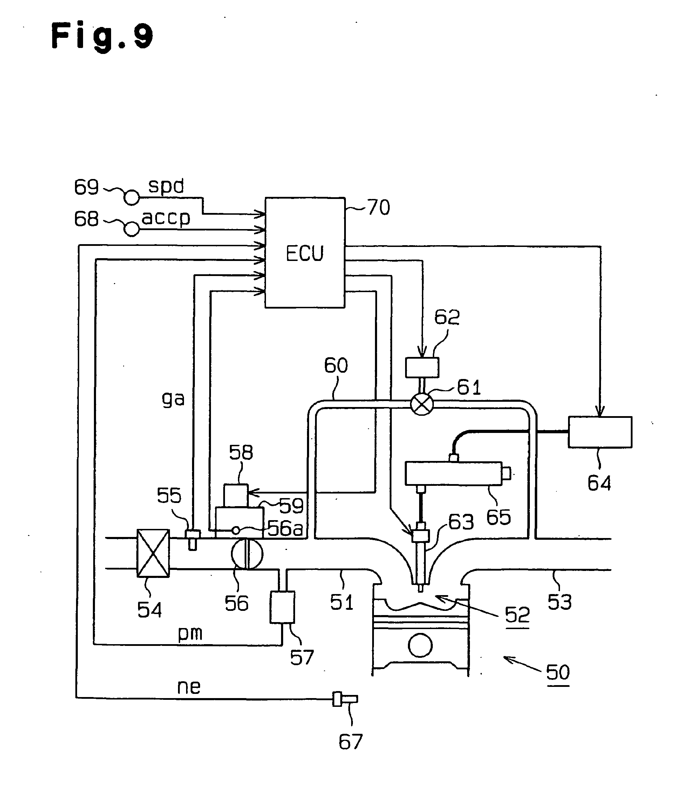

A third embodiment of the invention will be described below in detail referring to Figs. 9 through 14.

An intake passage 51 and an exhaust passage 53 are connected to a combustion chamber 52 of a diesel engine 50 shown in Fig. 9. Provided in the intake passage 51 from the upstream side to the downstream side are an air cleaner 54 which filters the intake air, an airflow meter 55 which measures the amount of intake air and a throttle valve 56 which regulates the amount of intake air by changing the flow path area of the intake passage 51.

The throttle valve 56 is opened and closed by a step motor 58 connected via a power transmission mechanism 59 which has gears. The step motor 58 is controlled by an electronic control unit (ECU) 70 which executes various kinds of control of the diesel engine 50. The power transmission mechanism 59 is provided with a fully-open switch 56a which checks if the throttle valve 56 is positioned at a fully open position. The ECU 70 grasps the degree of opening of the throttle valve 56 (the degree of throttle opening) based on the relative step position of the step motor 58 with reference to the fully open position checked by the fully-open switch 56a.

Connected to the downstream side of the throttle valve 56 in the intake passage 51 are an intake pressure sensor 57 which measures the internal pressure (intake pressure) of the intake passage 51 and an EGR passage 60 which is branched from the exhaust passage 53 and is merged to the intake passage 51. Provided in the EGR passage 60 is an EGR control valve 61 which is opened and closed by an actuator 62, such as a diaphragm, which is controlled by the ECU 70. In the embodiment, the EGR system is constituted by the EGR passage 60, the EGR control valve 61, the actuator 62 and so forth.

The ECU 70 adjusts the flow rate of the gas that is led into the combustion chamber 52 through the control on the degree of opening of the throttle valve 56 and adjusts the flow rate (EGR amount) of the exhaust gas that is recirculated to the intake passage 51 through the control on the degree of opening of the EGR control valve 61. As only the degree of opening of the EGR control valve 61 is changed while keeping the other conditions such as the degree of throttle opening, the EGR amount changes while the total flow rate of the gas that is led into the combustion chamber 52 is constant. Therefore, the total flow rate of the gas that is led into the combustion chamber 52 and the ratio of the exhaust gas contained in that gas (EGR ratio) can be controlled freely by the control on the degrees of opening of the throttle valve 56 and the EGR control valve 61. In this way, the proper EGR control can be carried out over a wide operational area of the diesel engine 50.

By the way, the airflow meter 55 provided upstream of the merged portion of the intake passage 51 with the EGR passage 60 detects only the flow rate of the gas to be led into the combustion chamber 52 excluding the EGR, i.e., the flow rate of the air that is supplied from the outside.

An injector 63 is provided in the combustion chamber 52 of the diesel engine 50. The diesel engine 50 employs a common rail type fuel feeding apparatus and has a common rail 65 which stores fuel pumped up by a fuel supply pump 64 from an unillustrated fuel tank. The operation of the fuel supply pump 64 is controlled by the ECU 70 and the pressure of the fuel inside the common rail 65 is kept optimal by the adjustment of the amount of the fuel fed under pressure from the pump 64. The high-pressure fuel stored in the common rail 65 is distributed to the injector 63 of each cylinder of the diesel engine 50. The injector 63 is driven by the ECU 70 and injects the optimal amount of fuel to the combustion chamber 52 at the optical timing based on an instruction from the ECU 70.

Further, input to the ECU 70 are detection signals from various sensors including an NE sensor 67 which detects an engine speed **ne**, an acceleration sensor 68 which detects a depression amount **accp** of the acceleration pedal and a vehicle speed sensor 69 which detects a vehicle speed **spd** in addition to the airflow meter 55 and the intake pressure sensor 57. Based on information obtained from the sensors, the ECU 70 executes operational controls of the diesel engine 50, such as the throttle control, EGR control and fuel injection control.

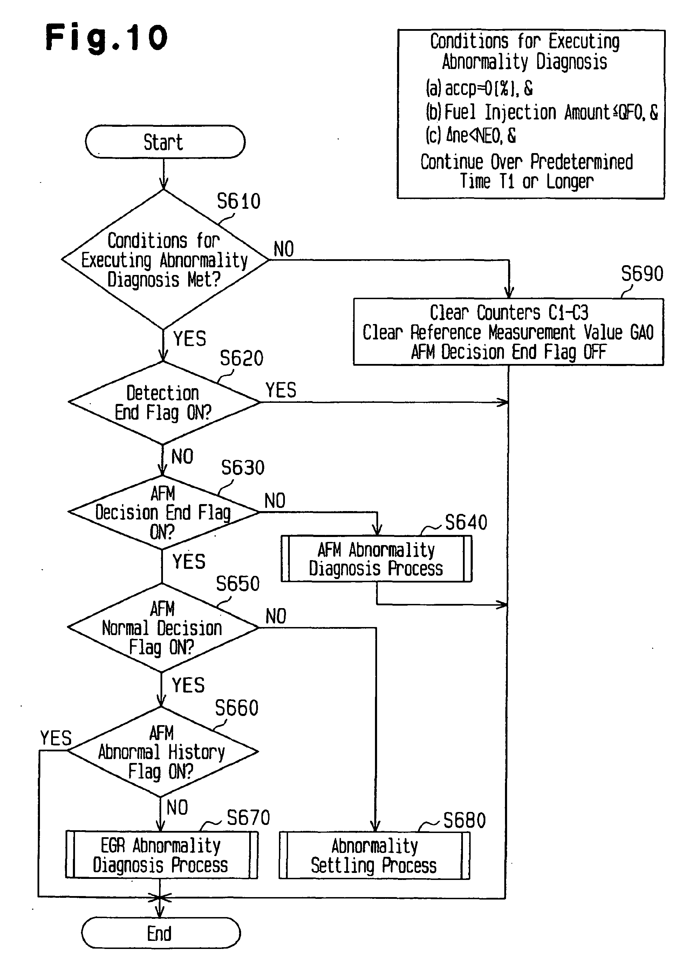

A description will now be given of abnormality diagnosis of the EGR system in the diesel engine 50 constructed in the above-described manner. Fig. 10 illustrates the main routine of an abnormality diagnosis process according to the embodiment. The process of the routine is executed cyclically by the ECU 70.

As the ECU 70 goes to the process of the routine, first it is determined in step 610 whether or not the conditions for the execution of abnormality diagnosis are satisfied. Specifically, the conditions for the execution of abnormality diagnosis are satisfied when the state where all of the following conditions (a) to (c) are met continues for a predetermined time T1 or longer until the present time.
Condition (a): The amount of depression of the acceleration pedal is zero [%].
Condition (b): The amount of fuel injection is equal to or smaller than the decision value QF0.
Condition (c): The rotational speed deviation ΔNE of the engine 50 is smaller than the predetermined value NE0.

The decision value QF0 here is set to a value smaller than the fuel injection amount at the time of idling and the fuel is hardly combusted in the combustion chamber 52 under such conditions. That all the above conditions (a) to (c) are met means that it is during fuel cutting at the time of vehicle deceleration. If such a state continues over the predetermined time T1 or longer, it is possible to determine that the operational state of the diesel engine 50 is stable. As abnormality diagnosis is executed during fuel cutting at the time of vehicle deceleration, the control on the throttle valve 56 and the EGR control valve 61 for abnormality diagnosis is prevented from significantly influence the drivability and the operation of the engine 50.

If the conditions for abnormality diagnosis are not met, the ECU 70 clears the values of individual counters C1 to C3 and a reference measurement value GA0 and sets an AFM (airflow meter) decision end flag in step 689 and the temporarily terminates the routine thereafter.

If the conditions for abnormality diagnosis are met (S610: YES), on the other hand, it is determined in subsequent step 620 whether or not the diagnosis end flag is on (ON). When the diagnosis end flag is on, the ECU 70 terminates the process of the routine.

The diagnosis end flag becomes on when the current abnormality diagnosis is completed and some diagnosis result (one of determination of abnormality of the airflow meter 55, determination of normality of the EGR and determination of abnormality of EGR) comes out. Therefore, the diagnosis result is output once during a single vehicle deceleration. The diagnosis end flag once set on is set off when the vehicle comes to a stationary state (including a gradual running state).

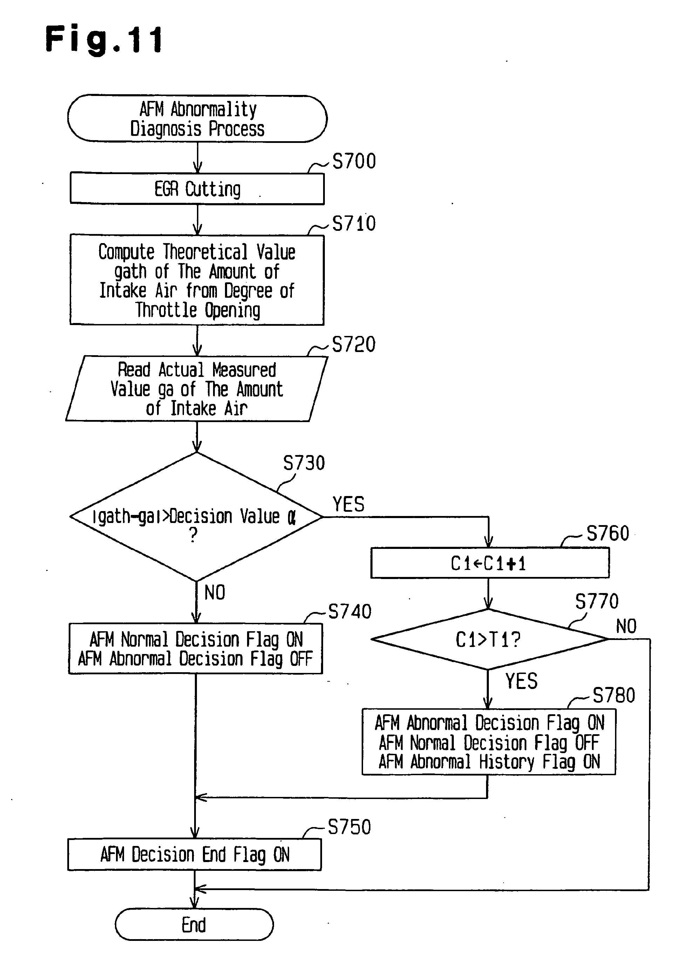

In next step 630, it is determined whether or not the AFM (airflow meter) decision end flag is on. The AFM decision end flag is set on when the decision on the presence/absence of an abnormality is completed in the "AFM abnormality diagnosis process" that judges the presence/absence of an abnormality in the airflow meter 55. If the AFM decision end flag is off (OFF) here, the ECU 70 shifts the process to the flow to step 640 and executes an AFM abnormality diagnosis process shown in Fig. 11. That is, processing at and after step 650 is not executed until the presence/absence of an abnormality in the airflow meter 55 in the AFM abnormality diagnosis process is completed.

### <AFM Abnormality Diagnosis Process>

The details of the "AFM abnormality diagnosis process" will be described by referring to Fig. 11. As the routine is repeated as needed, abnormality diagnosis on the airflow meter 55 is carried out.

When the process moves to the process of this routine, the ECU 70 executes EGR cutting in step 700 or stops the recirculation of the exhaust gas into the intake passage 51 with the EGR control valve 61 fully closed. Then, the ECU 70 computes a theoretical value **gath** of the amount of intake air from the degree of throttle opening at that time in step 710. During EGR cutting, all the gas to be led into the combustion chamber 52 becomes air led from the outside so that the flow rate of the gas that flows through the portion of the intake passage 51 where the airflow meter 55 is disposed coincides with the flow rate of the gas that is led into the combustion chamber 52. It is therefore possible to uniquely acquire the amount of intake air from the degree of throttle opening.

In step 720, the amount of intake air that is actually detected by the airflow meter 55 or an actual measured value **ga** of the amount of intake air is read and it is determined in next step 730 whether or not a difference between the actual measured value **ga** and the theoretical value **gath** (|**gath - ga**|) is greater than a decision value α.

At this time, the actual measured value **ga** and the theoretical value **gath** should take nearly the same values. If their difference is equal to or smaller than the decision value α, therefore, it is determined that the airflow meter 55 is normal and an AFM normal decision flag indicating that the airflow meter 55 is normal is set on in step 740. If the airflow meter 55 has been judged as being abnormal in the previous AFM abnormality diagnosis process and an AFM abnormal decision flag has been set on, this flag is set off. Then, the ECU 70 sets the AFM decision end flag on in step 750 and terminates the process of the routine.

If the difference between the actual measured value **ga** and the theoretical value **gath** is greater than the decision value α (S730: YES), on the other hand, the AFM abnormal decision counter C1 is incremented in step 760. In subsequent step 770, it is determined whether or not the value of the counter C1 exceeds the predetermined time T1. When the value of the counter C1 is equal to or smaller than the predetermined time T1, the process of the routine is temporarily terminated in that state.

When the value of the counter C1 exceeds the predetermined time T1 (S770: YES), i.e., when the state in which the difference between the actual measured value **ga** and the theoretical value **gath** is greater than the decision value α continues over a given time or longer, the AFM abnormal decision flag is set on in step 780. If the AFM normal decision flag has been set on in the previous AFM abnormality diagnosis process, this flag is set off. Further, the ECU 70 sets an AFM abnormal history flag on, sets the AFM decision end flag on in step 750, and then terminates the process of the routine.

The AFM abnormal history flag, once set on, is held on until the ignition switch is turned off. If a normal decision is made in the AFM abnormality diagnosis process after an abnormality decision was made, therefore, the AFM abnormal decision flag returns to OFF from ON whereas the AFM abnormal history flag is held on.

The abnormal decision on the airflow meter 55 here is a temporary one and is not determined at this point of time. The settling of the abnormal decision is executed in an "abnormality settling process" to be discussed later.

The AFM abnormality diagnosis process is repeatedly executed until the conditions for abnormality diagnosis become unsatisfied after the conditions have been satisfied or until the AFM decision end flag becomes on after the normal decision or abnormal decision has been made. The above are the details of the AFM abnormality diagnosis process.

If the decision in the above-described AFM abnormality diagnosis process is completed and the AFM decision end flag is set on (YES) in step 630 in the main routine in Fig. 10, it is determined whether or not the AFM normal decision flag is on in subsequent step 650.

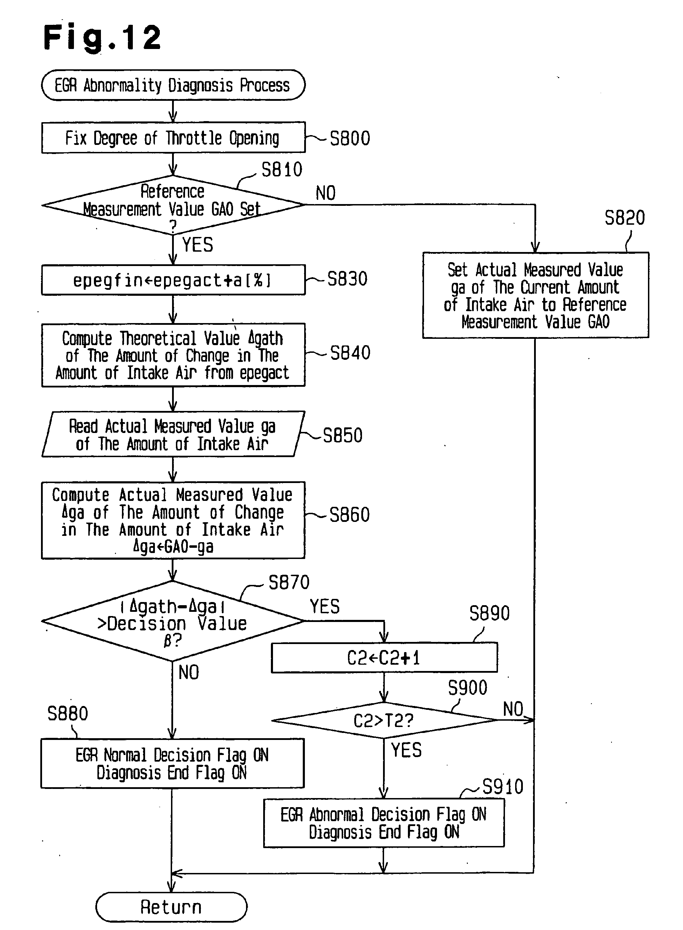

If the AFM normal decision flag is on (YES) here, it is determined whether or not the AFM abnormal decision flag is on in next step 660. If the flag is off (S660: NO), the process of the ECU 70 goes to an "EGR abnormality diagnosis process" shown in Fig. 12 in step 670.

If the AFM abnormal history flag is off (S660: YES), on the other hand, the ECU 70 terminates the process of the routine in that state. That is, even if the airflow meter 55 has been judged as being normal in the current abnormality diagnosis, the EGR abnormality diagnosis process is not executed in the routine if an abnormality in the airflow meter 55 has been judged even once after the ignition of the diesel engine 50.

### <EGR Abnormality Diagnosis Process>

The details of the "EGR abnormality diagnosis process" will be described by referring to Fig. 12. As the process of the routine is repeated as needed, abnormality diagnosis on the EGR system is carried out.

When the process goes to the process of this routine, first, the ECU 70 fixes the degree of throttle opening to the current degree of opening in step 800.

In subsequent step 810, it is determined whether or not the reference measurement value GA0 has been learnt in the current abnormality diagnosis. If the reference measurement value GA0 is not set (S810: NO), the actual measured value **ga** of the current amount of intake air is set as the reference measurement value GA0 and the process is temporarily terminated.

If the reference measurement value GA0 is set (S810: YES), the target opening degree **epegfin** of the EGR control valve 61 is set in next step 830. The target opening degree **epegfin** is set by adding the gradual change amount "a%" to the actual opening degree **epegact** of the EGR control valve 61. The gradual change amount "a%" is set to, for example, about 10%. The target opening degree **epegfin** and the actual opening degree **epegact** are set as 0% when the EGR control valve 61 is fully closed and 100% when it is fully opened. Therefore, the EGR control valve 61 is controlled in such a way that the degree of opening increases gradually.

The AFM abnormality diagnosis process has always been executed prior to the execution of the EGR abnormality diagnosis process in the present embodiment as shown in Fig. 10, and EGR cutting is performed in the AFM abnormality diagnosis process (step 700 in Fig. 11). During determination of an abnormality in the system of EGR, therefore, the EGR control valve 61 is controlled toward the valve opening direction gradually from the fully closed state.

After the degree of opening of the EGR control valve 61 is controlled in this way, a theoretical value **Δgath** of the amount of a change in the amount of intake air is computed from the actual opening degree **epegact** of the EGR control valve 61 in next step 840. The amount of a change in the amount of intake air here indicates the amount of a change in the amount of intake air between the time at which the reference measurement value GA0 has been learnt and the current time. With the degree of throttle opening fixed, the total flow rate of the gas to be led into the combustion chamber 52 is kept nearly constant. The amount of a change in the amount of intake air here should be approximately identical to the EGR amount at that time. Therefore, the EGR amount that is predicted from the actual opening degree **epegact** of the EGR control valve 61 is acquired as the theoretical value **Δgath** of the amount of a change in the amount of intake air.

Thereafter, the ECU 70 reads the actual measured value **ga** of the amount of intake air at the point of time when it is detected by the airflow meter 55 in step 850, and acquires an actual measured value **Δga** of the amount of a change in the amount of intake air by subtracting the actual measured value **ga** of the amount of intake air from the reference measurement value GA0 in next step 860.

In subsequent step 870, it is determined whether or not a difference between the actual measured value **Δga** of the amount of a change in the amount of intake air and the theoretical value **Δgath**, obtained in the above manner, exceeds a predetermined decision value β. That is, it is determined here if there is a significant difference between the actual measured value **Δga** and the theoretical value Δgath.

If there is no abnormality in the EGR system, the actual measured value **Δga** and the theoretical value **Δgath** should take nearly the same values. If their difference (|**Δgath** - **Δga**|) does not exceed the decision value β (5870: NO), the ECU 70 sets an EGR normal decision flag on and the diagnosis end flag on, and then terminates the process.

If the difference between the actual measured value **Δga** and the theoretical value **Δgath** exceeds the predetermined decision value β (S870: YES), the value of the EGR abnormal decision counter C2 is incremented.

Then it is determined in next step 900 whether or not the value of the counter C2 is equal to or greater than a predetermined time T2. If the value of the counter C2 is equal to or smaller than a predetermined time T2 (S900: NO), the process of the routine is temporarily terminated in that state. In this case, as long as the conditions for abnormality diagnosis are met, the process of the routine is executed again.

If the value of the counter C2 is greater than the predetermined time T2 (S900: YES), i.e., when the state in which the difference between the actual measured value **Δga** and the theoretical value **Δgath** exceeds the predetermined decision value β continues over a given time or longer, the ECU 70 sets an EGR abnormal decision flag on and the diagnosis end flag on in step 910, then terminates the process.

When either the EGR normal decision flag or and the EGR abnormal decision flag is set on, the diagnosis end flag is set on and the current abnormality diagnosis is competed. The above are the details of the EGR abnormality diagnosis process.

According to the present embodiment, as apparent from the above, a decision on an abnormality of the EGR is carried out based on the amount of intake air detected by the airflow meter 55 only when it is confirmed that there is no abnormality in the airflow meter 55.

Even if the AFM abnormal decision flag is set on in the AFM abnormality diagnosis process, it is not possible to settle that there is an abnormality in the airflow meter 55 immediately. This is because when a sticking abnormality occurs in the EGR control valve 61 and the valve 61 cannot be fully closed, disabling the execution of EGR cutting, the AFM abnormal decision flag may be set on even if there is not any abnormality in the airflow meter 55.

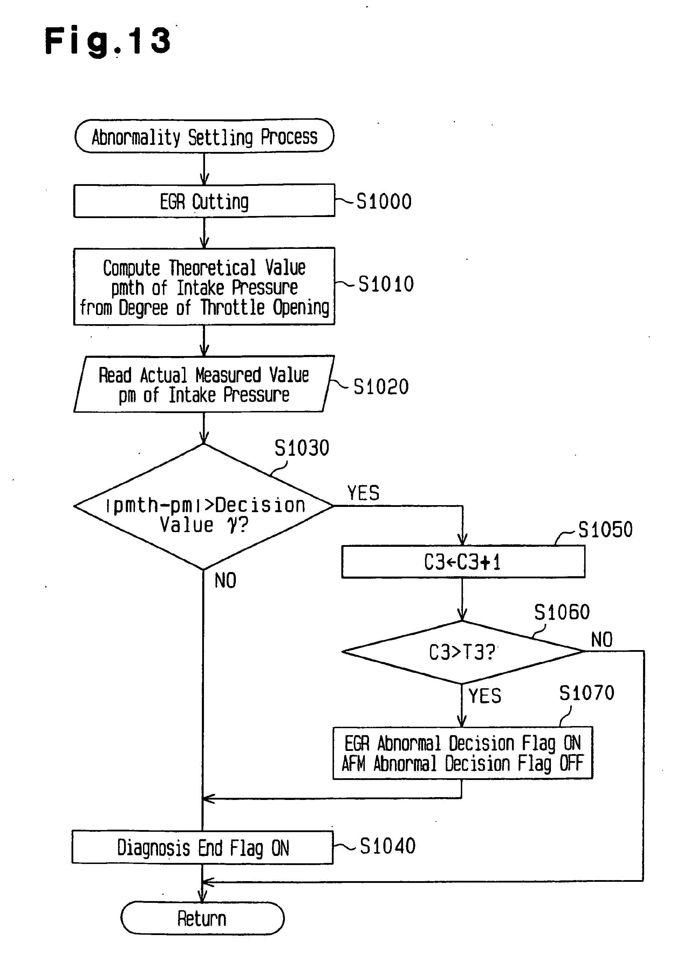

If the AFM normal decision flag is off in step 650 in the main routine in Fig. 10 (S650: NO), i.e., when the AFM abnormal decision flag is set on in the AFM abnormality diagnosis process, the ECU 70 goes to the "abnormality settling process" shown in Fig. 13 in step 640 where it specifies an abnormal portion. The following will discuss the abnormality settling process in detail.

### <Abnormality Settling Process>

Fig. 13 illustrates the flowchart of the abnormality settling process. The ECU 70 repeatedly executes the process of the routine as needed to specify an abnormal portion.

As the ECU 70 proceeds to the process of this routine, the ECU 70 executes EGR cutting in step 1000 first. In subsequent step 1010, a theoretical value **pmth** of the intake pressure is computed from the degree of throttle opening. During EGR cutting, like the amount of intake air, the intake pressure can be uniquely acquired as a function of the degree of throttle opening.

Then, the actual measured value **pm** of the intake pressure detected by the intake pressure sensor 57 is read in step 1020 and it is determined in next step 1030 whether or not a difference between an actual measured value **pm** and the theoretical value **pmth** (|**pmth** - **pm**|) is greater than a decision value γ.

If the actual measured value **pm** is nearly identical to the theoretical value **pmth**, it is determined that EGR cutting is being carried out properly. When the difference (|**pmth** - **pm**|) is equal to or smaller than the decision value γ (S1030: NO), therefore, the diagnosis end flag is set on in step 1040 to complete the current abnormality diagnosis. Accordingly, a decision of the airflow meter 55 as being abnormal is determined.

When the difference (|**pmth** - **pm**|) is greater than the decision value γ (S1030: YES), on the other hand, the abnormal decision counter C3 is incremented in step 1050. In subsequent step 1060, it is determined whether or not the value of the counter C3 exceeds a predetermined value T3. If the value of the counter C3 is equal to or smaller than the predetermined value T3 (S1060: NO), the process of the routine is temporarily terminated in that state.

If the value of the counter C3 exceeds the predetermined value T3 (S1060: YES), i.e., if inconsistency between the theoretical value **pmth** and the actual measured value **pm** continues over a given time or longer, it is apparent that the intake pressure sensor 57 has output an improper detection result which does not match the circumstance. If the probability of simultaneous failing of the airflow meter 55 and the intake pressure sensor 57 is hardly probable, it is possible to determine in this case that a sticking abnormality has occurred in the EGR control valve 61.

In that case, therefore, the EGR abnormal decision flag is set on and the AFM abnormal decision flag which has been set on in the previous AFM abnormality diagnosis process is set off in step 1070. Then, the diagnosis end flag is set on in step 1040 to settle the diagnosis result indicating the presence of an abnormality diagnosis in the EGR system, then the current abnormality diagnosis is completed.

As long as the conditions for abnormality diagnosis are satisfied, the abnormality setting process is repeatedly executed until the diagnosis end flag is set on. The above are the details of the abnormality setting process.

The abnormality diagnosis that is performed in the above-described manner is repeatedly carried out every time vehicle deceleration takes place. In the present embodiment, when the same diagnosis result (one of AFM abnormal decision, EGR normal decision and EGR abnormal decision) is detected consecutively a predetermined number of times, the diagnosis result is recognized as a determined one and abnormality diagnosis is not executed during that trip.

The above-described embodiment can obtain the following advantages.
(1) Although the EGR system is diagnosed based on the amount of intake air detected by the airflow meter 55 in the present embodiment, abnormality diagnosis on the airflow meter 55 is executed prior to the decision and abnormality diagnosis of the EGR system is not executed when it is confirmed that there is an abnormality in the airflow meter 55. This prevents abnormality diagnosis using the value measured by the failed airflow meter 55, so that an abnormality in EGR can be detected more accurately.
(2) According to the present embodiment, abnormality diagnosis of the airflow meter 55 is performed immediately before abnormality diagnosis of the EGR system. It is therefore possible to execute abnormality diagnosis of the EGR system while the airflow meter 55 being normal is guaranteed more, thereby ensuring a further improvement of the precision of detecting an abnormality in the EGR system.
(3) According to the present embodiment, EGR cutting is performed during abnormality diagnosis of the airflow meter 55 and control to forcibly change the degree of opening of the EGR control valve 61 is executed during abnormality diagnosis of the EGR system. During those diagnoses, the normal EGR control is interrupted. It is to be noted however that because abnormality diagnosis of the EGR system consecutively takes place immediately after abnormality diagnosis of the airflow meter 55 in the embodiment, it is possible to reduce the number of times the normal EGR control is interrupted.
(4) According to the embodiment, once it is confirmed that there is an abnormality in the airflow meter 55, when it is confirmed thereafter that the airflow meter 55 is normal, abnormality diagnosis of the EGR system using the measured value from the airflow meter 55 is not executed. That is, abnormality diagnosis of the EGR system using the measured value from an unstable sensor (airflow meter 55) whose abnormality has been confirmed once is prevented. This can further increase the precision of the EGR abnormality diagnosis.
(5) According to the embodiment, abnormality diagnosis of the EGR system is executed by controlling the degree of opening of the EGR control valve 61 in such a way that the degree of opening is changed gradually. Therefore, the EGR amount does not drastically change at the time of making a decision, it is possible to suppress the influence of an abrupt change in EGR amount on the operation of the engine 50 (for example, the deterioration of the exhaust emission, a variation in engine torque, etc.).

If the amount of intake air varies in accordance with a change in EGR amount, the intake pressure detected by the intake pressure sensor 57 also varies. Therefore, abnormality diagnosis of the EGR system can be executed similarly even by using the amount of a change in intake pressure that is detected by the intake pressure sensor 57 instead of the amount of a change in the amount of intake air that is detected by the airflow meter 55. In this case, the precision of abnormality diagnosis can be increased also by executing abnormality diagnosis on the intake pressure sensor 57 beforehand and preventing abnormality diagnosis of the EGR system using the measured value of the intake pressure sensor 57 when an abnormality of the intake pressure sensor 57 is confirmed.

Further, even if there is an abnormality in the airflow meter 55, abnormality diagnosis of the EGR system can be carried out by using the amount of a change in intake pressure. The abnormality diagnosis may therefore be executed as follows.

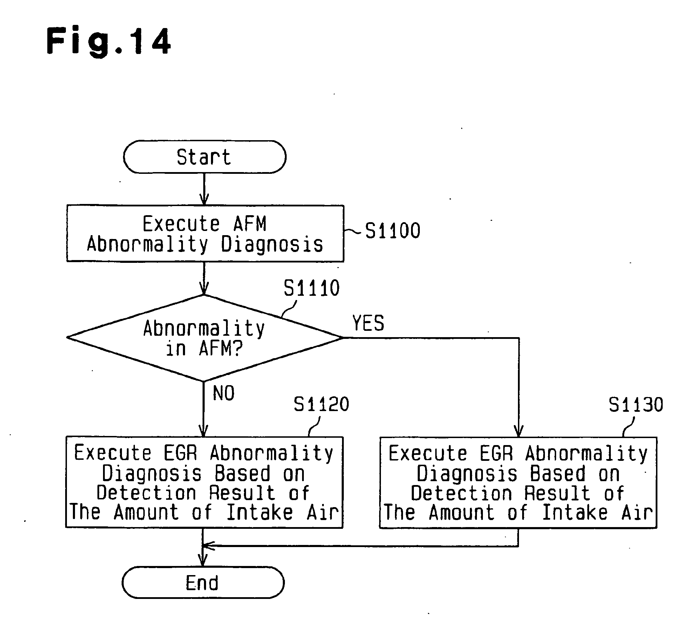

Fig. 14 is a flowchart schematically illustrating the procedures of the ECU 70 at the time of executing abnormality diagnosis on the EGR system. Even in the abnormality diagnosis in the routine in Fig. 14, abnormality diagnosis on the airflow meter 55 is executed first prior to the execution of abnormality diagnosis on the EGR system (S1100). This abnormality diagnosis is performed through the above-described AFM abnormality diagnosis process. That is, the process of the flowchart in Fig. 11 is executed repeatedly as needed.

When it is confirmed that there is no abnormality in the airflow meter 55 as a consequence of the decision (S1110: NO), abnormality diagnosis on the EGR system is carried out by using the amount of a change in the amount of intake air that is detected by the airflow meter 55 (S1120). This abnormality diagnosis is executed by repeatedly performing the above-described EGR abnormality diagnosis process as needed.

When it is confirmed that there is an abnormality in the airflow meter 55 (S1110: YES), abnormality diagnosis on the EGR system is carried out by using the amount of a change in intake pressure that is detected by the intake pressure sensor 57 (S1130).

The abnormality diagnosis this time is performed through the process that uses the amount of a change in intake pressure instead of the amount of a change in the amount of intake air in the above-described EGR abnormality diagnosis process. That is, the theoretical value of the amount of a change in intake pressure is acquired from the actual opening degree **epegact** of the EGR control valve 61 in step 840 in Fig. 12, and the actual measured value of the amount of a change in intake pressure is acquired in step 860 from the actual measured value of the intake pressure read in step 850. Then, it is determined whether or not the difference between the actual measured value and the theoretical value of the amount of a change in intake pressure is greater than a predetermined decision value. Of course, the reference measurement value that is learned in step 820 is also based on the actual measured value of the intake pressure at that time.

The execution of abnormality diagnosis this way can ensure abnormality diagnosis of the EGR system even if there is an abnormality in the airflow meter 55. Of course, abnormality diagnosis on the EGR system may be executed by executing abnormality diagnosis on the intake pressure sensor prior to the abnormality diagnosis on the EGR system and using the amount of a change in intake pressure when an abnormality in the intake pressure sensor is not confirmed or by using the amount of a change in the amount of intake air when an abnormality is confirmed.

The above-described embodiment may be modified as follows.

The contents of the conditions for executing abnormality diagnosis for which whether or not the conditions are satisfied is determined in step 610 in Fig. 10 may be changed as needed. Of course, it is desirable to set the execution conditions in such a way that abnormality diagnosis is performed under the circumstance where the influence of the control of the throttle valve 56 and the EGR control valve 61 in abnormality diagnosis on the operation of the diesel engine 50 is small and the engine's operational state is stable.

Although abnormality diagnosis on the airflow meter 55 and abnormality diagnosis on the EGR system are executed consecutively in the embodiment, those abnormality diagnoses may be performed at different timings or in different circumstances. In that case, erroneous abnormality diagnosis on the EGR system can be reduced by executing abnormality diagnosis on the airflow meter 55 prior to abnormality diagnosis on the EGR system and preventing abnormality diagnosis of the EGR system when an abnormality in the airflow meter 55 is confirmed.

Although the embodiment above has been illustrated as performing abnormality diagnosis on the EGR system by using the amount of a change in the amount of intake air or the amount of a change in intake pressure, abnormality diagnosis on the EGR system can be carried out using the amount of a change in an engine control amount other than them, as long as the value of the engine control amount changes in association with the EGR amount. In case of an engine equipped with a sensor which measures the intake pressure of the EGR passage 60, for example, abnormality diagnosis can be carried out based on the amount of a change in intake pressure in the EGR passage 60.

In the embodiment above, once an abnormality in the airflow meter 55 is confirmed in the process of step 660 in Fig. 10, even if the airflow meter 55 becoming normal again is confirmed thereafter, the presence/absence of an abnormality in the EGR system is not determined. Such a process may however be omitted. That is, when the airflow meter 55 whose abnormality has been confirmed beforehand is returned to normal, execution of abnormality diagnosis on the EGR system may be permitted.

The presence/absence of an abnormality in airflow meter 55 may be confirmed by a method different from the one based on the AFM abnormality diagnosis process in Fig. 11.

According to the embodiment above, when a decision on an abnormality of the airflow meter 55 (the AFM abnormal decision flag being on) is made in the AFM abnormality diagnosis process, the abnormality settling process to specify an abnormal portion is carried out by executing a similar decision on abnormality by using the measured value from the intake pressure sensor 57. Such specifying of an abnormal portion may be done by another method. Further, such specifying of an abnormal portion may not be performed immediately after abnormality decision on the airflow meter 55 is made. Further, if it is sufficient to confirm that some sort of abnormality exists without specifying an abnormal portion, specifying such an abnormal portion may be omitted.

A decision on the presence/absence of an abnormality in the EGR system in the embodiment above should not necessarily be executed while the degree of throttle opening is fixed. Although the amount of intake air changes if the degree of throttle opening is changed, the amount of a change in the amount of intake air can be acquired theoretically. It is therefore possible to determine whether or not there is an abnormality in the EGR system by acquiring the theoretical value for the amount of a change in the amount of intake air in consideration of the alteration of the degree of throttle opening and the alteration of the degree of opening of the EGR control valve 61 and comparing the value with the actual measured value of the amount of a change in the amount of intake air that is detected by the airflow meter 55.

## Claims

1. (Amended) An abnormality diagnosing apparatus for an exhaust gas recirculation system which connects an exhaust system of an internal combustion engine to a downstream side of a throttle valve of an intake system by an exhaust gas recirculation passage and which controls a degree of opening of a control valve provided in said exhaust gas recirculation passage to thereby adjust an amount of an exhaust gas to be recirculated to said intake system from said exhaust system,
wherein, when a predetermined abnormality diagnosis condition is met, actuation control of said control valve is performed in such a way as to gradually change said degree of opening of said control valve over a predetermined period, an amount of a change in an amount of intake air or an amount of a change in intake pressure in the predetermined period is compared with a decision value to determine whether there is an abnormality in the exhaust gas recirculation system, wherein, if the exhaust gas recirculation system is functioning normally, the predetermined period is set such that the amount of a change in the amount of intake air or the amount of a change in the intake pressure exceeds the decision value.

2. The abnormality diagnosing apparatus for an exhaust gas recirculation system according to Claim 1, wherein abnormality diagnosis of said exhaust gas recirculation system is carried out when an operational state of said internal combustion engine is stable.

3. The abnormality diagnosing apparatus for an exhaust gas recirculation system according to any of Claims 1 and 2, wherein abnormality diagnosis of said exhaust gas recirculation system is carried out when said internal combustion engine is in a vehicle deceleration state and an amount of fuel supply is equal to or smaller than a predetermined amount.

4. The abnormality diagnosing apparatus for an exhaust gas recirculation system according to any one of Claims 1 to 3, wherein at a time of executing abnormality diagnosis, a change in a degree of opening of said throttle valve is suppressed.

5. The abnormality diagnosing apparatus for an exhaust gas recirculation system according to Claim 4, wherein at a time of executing abnormality diagnosis, said degree of opening of said throttle valve is fixed.

6. The abnormality diagnosing apparatus for an exhaust gas recirculation system according to any one of Claims 1 to 5, wherein a diagnosis result is determined after diagnosis is repeated a predetermined number of times and abnormality diagnosis is prevented within a same trip after said diagnosis result is determined.

7. The abnormality diagnosing apparatus for an exhaust gas recirculation system according to any one of Claims 1 to 6, wherein at a time of executing abnormality diagnosis, a direction of actuation of said control valve is set based on said degree of opening of said control valve when said abnormality diagnosis condition is met.

8. The abnormality diagnosing apparatus for an exhaust gas recirculation system according to Claim 7, wherein at a time of executing abnormality diagnosis, said direction of actuation of said control valve is set in a closing direction when said degree of opening of said control valve at a time said abnormality diagnosis condition is met is equal to or greater than a first predetermined degree of opening and said direction of actuation of said control valve is set in an opening direction when said degree of opening of said control valve at a time said abnormality diagnosis condition is met is smaller than said first predetermined degree of opening.

9. The abnormality diagnosing apparatus for an exhaust gas recirculation system according to Claim 8, wherein a gradual change amount for actuating said control valve to said closing direction and a gradual change amount for actuating said control valve to said opening direction are set different from each other.

10. The abnormality diagnosing apparatus for an exhaust gas recirculation system according to Claim 9, wherein said gradual change amount for actuating said control valve to said closing direction is set larger than said gradual change amount for actuating said control valve to said opening direction.

11. The abnormality diagnosing apparatus for an exhaust gas recirculation system according to any of Claims 9 and 10, wherein when said degree of opening of said control valve reaches a second predetermined degree of opening in accordance with actuation control of said control valve, said gradual change amount of said control valve is changed.

12. The abnormality diagnosing apparatus for an exhaust gas recirculation system according to Claim 11, wherein at a time of changing said gradual change amount of said control valve, said gradual change amount is so changed as to become larger in said opening direction of said control valve and become smaller in said closing direction of said control valve.

13. The abnormality diagnosing apparatus for an exhaust gas recirculation system according to Claim 7, wherein when said degree of opening of said control valve at a time said abnormality diagnosis condition is met is smaller than a third predetermined degree of opening, abnormality diagnosis is prevented.

## Patentansprüche

1. Abnormalitätsdiagnosegerät für ein Abgasrückführungssystem, das ein Abgassystem einer Brennkraftmaschine mit einer stromabwärtigen Seite einer Drosselklappe eines Einlasssystems durch einen Abgasrückführungsdurchgang verbindet und das einen Grad einer Öffnung eines Steuerventils, das in dem Abgasrückführungsdurchgang vorgesehen ist, steuert, um dadurch eine Menge eines Abgases einzustellen, das von dem Abgassystem zu dem Einlasssystem zurückzuführen ist,
wobei, wenn eine vorbestimmte Abnormalitätsdiagnosebedingung erfüllt ist, eine Betätigungssteuerung des Steuerventils in solch einer Weise durchgeführt wird, um den Öffnungsgrad des Steuerventils über eine vorbestimmte Zeitspanne allmählich zu ändern, und ein Betrag einer Änderung einer Menge einer Einlassluft oder ein Betrag einer Änderung eines Einlassdrucks in der vorbestimmten Zeitspanne wird mit einem Entscheidungswert verglichen, um zu bestimmen, ob es eine Abnormalität in dem Abgasrückführungssystem gibt, wobei, falls das Abgasrückführungssystem normal funktioniert, die vorbestimmte Zeitspanne derart festgelegt ist, dass der Betrag einer Änderung der Einlassluftmenge oder der Betrag einer Änderung des Einlassdrucks den Entscheidungswert übersteigt.

2. Abnormalitätsdiagnosegerät für ein Abgasrückführungssystem nach Anspruch 1, wobei eine Abnormalitätsdiagnose des Abgasrückführungssystems ausgeführt wird, wenn ein Betriebszustand der Brennkraftmaschine stabil ist.

3. Abnormalitätsdiagnosegerät für ein Abgasrückführungssystem nach Anspruch 1 oder 2, wobei eine Abnormalitätsdiagnose des Abgasrückführungssystems ausgeführt wird, wenn die Brennkraftmaschine in einem Fahrzeugverzögerungszustand ist und eine Kraftstoffzufuhrmenge gleich wie oder kleiner als eine vorbestimmte Menge ist.

4. Abnormalitätsdiagnosegerät für ein Abgasrückführungssystem nach einem der Ansprüche 1 bis 3, wobei zu einer Zeit des Ausführens einer Abnormalitätsdiagnose eine Änderung eines Öffnungsgrads der Drosselklappe unterdrückt wird.

5. Abnormalitätsdiagnosegerät für ein Abgasrückführungssystem nach Anspruch 4, wobei zu der Zeit des Ausführens einer Abnormalitätsdiagnose der Öffnungsgrad der Drosselklappe fixiert ist.

6. Abnormalitätsdiagnosegerät für ein Abgasrückführungssystem nach einem der Ansprüche 1 bis 5, wobei ein Diagnoseergebnis bestimmt wird, nachdem eine Diagnose eine vorbestimmte Anzahl von Malen wiederholt worden ist, und eine Abnormalitätsdiagnose innerhalb einer selben Fahrt verhindert wird, nachdem das Diagnoseergebnis bestimmt worden ist.

7. Abnormalitätsdiagnosegerät für ein Abgasrückführungssystem nach einem der Ansprüche 1 bis 6, wobei zu einer Zeit des Ausführens einer Abnormalitätsdiagnose eine Betätigungsrichtung des Steuerventils auf der Basis des Öffnungsgrads des Steuerventils festgelegt wird, wenn die Abnormalitätsdiagnosebedingung erfüllt ist.

8. Abnormalitätsdiagnosegerät für ein Abgasrückführungssystem nach Anspruch 7, wobei zu einer Zeit des Ausführens einer Abnormalitätsdiagnose, die Betätigungsrichtung des Steuerventils in einer Schließrichtung festgelegt wird, wenn der Öffnungsgrad des Steuerventils zu einer Zeit, bei der die Abnormalitätsdiagnosebedingung erfüllt ist, gleich wie oder größer als ein erster vorbestimmter Öffnungsgrad ist, und die Betätigungsrichtung des Steuerventils in einer Öffnungsrichtung festgelegt wird, wenn der Öffnungsgrad des Steuerventils zu einer Zeit, bei der die Abnormalitätsdiagnosebedingung erfüllt ist, kleiner als der erste vorbestimmte Öffnungsgrad ist.

9. Abnormalitätsdiagnosegerät für ein Abgasrückführungssystem nach Anspruch 8, wobei ein allmählicher Änderungsbetrag zum Betätigen des Steuerventils in die Schließrichtung und ein allmählicher Änderungsbetrag zum Betätigen des Steuerventils in die Öffnungsrichtung unterschiedlich voneinander festgelegt sind.

10. Abnormalitätsdiagnosegerät für ein Abgasrückführungssystem nach Anspruch 9, wobei der allmähliche Änderungsbetrag zum Betätigen des Steuerventils in die Schließrichtung größer festgelegt ist als der allmähliche Änderungsbetrag zum Betätigen des Steuerventils in die Öffnungsrichtung.

11. Abnormalitätsdiagnosegerät für ein Abgasrückführungssystem nach Anspruch 9 oder 10, wobei, wenn der Öffnungsgrad des Steuerventils einen zweiten vorbestimmten Öffnungsgrad gemäß einer Betätigungssteuerung des Steuerventils erreicht, der allmähliche Änderungsbetrag des Steuerventils geändert wird.

12. Abnormalitätsdiagnosegerät für ein Abgasrückführungssystem nach Anspruch 11, wobei zu einer Zeit des Änderns des allmählichen Änderungsbetrags des Steuerventils, der allmähliche Änderungsbetrag so geändert wird, um in der Öffnungsrichtung des Steuerventils größer zu werden und um in der Schließrichtung des Steuerventils kleiner zu werden.

13. Abnormalitätsdiagnosegerät für ein Abgasrückführungssystem nach Anspruch 7, wobei, wenn der Öffnungsgrad des Steuerventils zu einer Zeit, bei der die Abnormalitätsdiagnosebedingung erfüllt ist, kleiner als ein dritter vorbestimmter Öffnungsgrad ist, eine Abnormalitätsdiagnose verhindert wird.

## Revendications

1. Appareil de diagnostic d'anomalie pour un système de recirculation des gaz d'échappement qui relie un système d'échappement d'un moteur à combustion interne à un côté en aval d'un papillon des gaz d'un système d'admission par un passage de recirculation des gaz d'échappement et qui commande le degré d'ouverture d'une soupape de commande prévue dans ledit passage de recirculation des gaz d'échappement réglant ainsi la quantité d'un gaz d'échappement à remettre en circulation vers ledit système d'admission à partir dudit système d'échappement,
dans lequel, lorsqu'une condition prédéterminée de diagnostic d'anomalie est remplie, une commande d'actionnement de ladite soupape de commande est exécutée de telle manière à changer progressivement ledit degré d'ouverture de ladite soupape de commande pendant une période prédéterminée, une quantité de changement dans la quantité d'air d'admission ou une quantité de changement de la pression d'admission dans la période prédéterminée est comparée à une valeur de décision pour déterminer s'il existe une anomalie dans le système de recirculation des gaz d'échappement, où, si le système de recirculation des gaz d'échappement fonctionne normalement, la période prédéterminée est établie de sorte que la quantité de changement dans la quantité d'air d'admission ou l'amplitude de variation dans la pression d'admission dépasse la valeur de décision.

2. Appareil de diagnostic d'anomalie pour un système de recirculation des gaz d'échappement selon la revendication 1, dans lequel un diagnostic d'anomalie dudit système de recirculation des gaz d'échappement est effectué lorsque l'état opérationnel dudit moteur à combustion interne est stable.

3. Appareil de diagnostic d'anomalie pour un système de recirculation des gaz d'échappement selon l'une des revendications 1 et 2, dans lequel un diagnostic d'anomalie dudit système de recirculation des gaz d'échappement est effectué lorsque ledit moteur à combustion interne est dans un état de décélération du véhicule et une quantité d'alimentation en carburant est inférieure ou égale à une quantité prédéterminée.

4. Appareil de diagnostic d'anomalie pour un système de recirculation des gaz d'échappement selon l'une quelconque des revendications 1 à 3, dans lequel lorsqu'un diagnostic d'anomalie est exécuté, un changement du degré d'ouverture dudit papillon des gaz est supprimé.

5. Appareil de diagnostic d'anomalie pour un système de recirculation des gaz d'échappement selon la revendication 4, dans lequel lorsqu'un diagnostic d'anomalie est exécuté, ledit degré de l'ouverture dudit papillon des gaz est fixé.

6. Appareil de diagnostic d'anomalie pour un système de recirculation des gaz d'échappement selon l'une quelconque des revendications 1 à 5, dans lequel un résultat de diagnostic est déterminé après que le diagnostic est répété un nombre prédéterminé de fois et le diagnostic d'anormalité est empêché dans une même période d'activité du moteur, après que ledit résultat de diagnostic est déterminé.

7. Appareil de diagnostic d'anomalie pour un système de recirculation des gaz d'échappement selon l'une quelconque des revendications 1 à 6, dans lequel lorsqu'un diagnostic d'anomalie est exécuté, une direction d'actionnement de ladite soupape de commande est établie sur la base dudit degré d'ouverture de ladite soupape de commande lorsque ladite condition de diagnostic d'anomalie est remplie.

8. Appareil de diagnostic d'anomalie pour un système de recirculation des gaz d'échappement selon la revendication 7, dans lequel lorsqu'un diagnostic d'anomalie est exécuté, ladite direction d'actionnement de ladite soupape de commande est établie dans une direction de fermeture lorsque ledit degré d'ouverture de ladite soupape de commande au moment où ladite condition de diagnostic d'anomalie est remplie, est supérieur ou égal à un premier degré d'ouverture prédéterminé et ladite direction d'actionnement de ladite soupape de commande est établie dans une direction d'ouverture lorsque ledit degré d'ouverture de ladite soupape de commande au moment où ladite condition de diagnostic d'anomalie est remplie, est plus petit que ledit premier degré d'ouverture prédéterminé.

9. Appareil de diagnostic d'anomalie pour un système de recirculation des gaz d'échappement selon la revendication 8, dans lequel une quantité de changement progressif pour actionner ladite soupape de commande vers ladite direction de fermeture et une quantité de changement progressif pour actionner ladite soupape de commande vers ladite direction d'ouverture sont établies l'une différente de l'autre.

10. Appareil de diagnostic d'anomalie pour un système de recirculation des gaz d'échappement selon la revendication 9, dans lequel ladite quantité de changement progressif pour actionner ladite soupape de commande vers ladite direction de fermeture est établie plus grande que ladite quantité de changement progressif pour actionner ladite soupape de commande vers ladite direction d'ouverture.

11. Appareil de diagnostic d'anomalie pour un système de recirculation des gaz d'échappement selon l'une des revendications 9 et 10, dans lequel, lorsque ledit degré d'ouverture de ladite soupape de commande atteint un deuxième degré d'ouverture prédéterminé conformément à une commande d'actionnement de ladite soupape de commande, ladite quantité de changement progressif de ladite soupape de commande change.

12. Appareil de diagnostic d'anomalie pour un système de recirculation des gaz d'échappement selon la revendication 11, dans lequel lors du changement de ladite quantité de changement progressif de ladite soupape de commande, ladite quantité de changement progressif est modifiée de manière à devenir plus grande dans ladite direction d'ouverture de ladite soupape de commande et à devenir plus petite dans ladite direction de fermeture de ladite soupape de commande.

13. Appareil de diagnostic d'anomalie pour un système de recirculation des gaz d'échappement selon la revendication 7, dans lequel, lorsque ledit degré d'ouverture de ladite soupape de commande au moment où ladite condition de diagnostic d'anomalie est remplie, est inférieur à un troisième degré d'ouverture prédéterminé, un diagnostic d'anomalie est empêché.
